# EUROPÄISCHE PATENTSCHRIFT

(11) **EP 1 478 556 B1**
(45) Veröffentlichungstag und Bekanntmachung des Hinweises auf die Patenterteilung: **24.05.2006**
(21) Anmeldenummer: 03718670.7
(22) Anmeldetag: 20.02.2003
(51) Int. Cl.: B60T 8/00, B60T 8/32, B60K 23/08

(54) **VORRICHTUNG UND VERFAHREN ZUR BEEINFLUSSUNG DER ARBEITSWEISE WENIGSTENS EINER IN EINEM FAHRZEUG ANGEORDNETEN FAHRZEUGSTABILISIERUNGSVORRICHTUNG**
DEVICE AND METHOD FOR INFLUENCING THE OPERATING MODE OF AT LEAST ONE VEHICLE STABILISING DEVICE ARRANGED IN A VEHICLE
DISPOSITIF ET PROCEDE POUR AGIR SUR LE MODE DE FONCTIONNEMENT D'AU MOINS UN DISPOSITIF DE STABILISATION MIS EN PLACE DANS UN VEHICULE

(30) Priorität: 28.02.2002 DE 10208645
(43) Veröffentlichungstag der Anmeldung: 24.11.2004
(73) Patentinhaber: DaimlerChrysler AG, 70567 Stuttgart (DE)
(72) Erfinder: HACK, Albert, 71063 Sindelfingen (DE); HIMLER, Franz, A-8130 Frohnleiten (AT); LINZMAYER, Gerd, A-8580 Köflach (AT)
(86) Internationale Anmeldenummer: PCT/EP2003/001734
(87) Internationale Veröffentlichungsnummer: WO 2003/072410

(56) Entgegenhaltungen:
- EP-A- 0 487 862
- EP-A- 1 059 216
- DE-A- 3 542 417
- DE-A- 3 835 906
- DE-A- 4 221 045
- DE-A- 19 921 064
- DE-A- 19 955 620
- US-A- 5 418 727

## Beschreibung

Die Erfindung betrifft eine Vorrichtung und ein Verfahren zur Beeinflussung der Arbeitsweise wenigstens einer in einem Fahrzeug angeordneten Fahrzeugstabilisierungsvorrichtung.

Fahrzeugstabilisierungsvorrichtungen sind heutzutage in vielfältiger Form bekannt. Als Beispiele seien hier Bremsassistenten (BAS), Bremsschlupfregelungen (ABS), Antriebsschlupfregelungen (ASR), elektronische Traktionssysteme (ETS) oder Fahrdynamikregelungen (ESP) genannt. Diese Fahrzeugstabilisierungsvorrichtungen haben eines gemeinsam: Sie steuern zur Stabilisierung des Fahrzeuges zumindest den Fahrzeugrädern zugeordnete Bremsaktuatoren fahrerunabhängig an. Im Straßenbetrieb haben sich diese Fahrzeugstabilisierungsvorrichtungen bewährt. Sie tragen zu einer besseren Beherrschbarkeit der Fahrzeuge und zu einer Reduzierung von Unfällen bei.

Vor diesem Hintergrund ist es verständlich, dass nach Möglichkeit ein Großteil der am Straßenverkehr teilnehmenden Fahrzeuge mit solchen Fahrzeugstabilisierungsvorrichtungen ausgestattet sein sollte. Dies gilt auch für Fahrzeuge mit Allradantrieb bzw. Geländefahrzeuge, denn auch bei diesen Fahrzeugen sollte nicht auf die fortschrittlichen Möglichkeiten der vorstehend aufgeführten Fahrzeugstabilisierungsvorrichtungen verzichtet werden. Schließlich ist es erstrebenswert, den Straßenverkehr so sicher wie möglich zu machen und das Unfallrisiko so weit wie möglich zu senken.

Bei Fahrzeugen mit Allradantrieb, genauer gesagt bei Geländefahrzeugen, bei denen für den harten bzw. extremen Geländeeinsatz, den sogenannten Offroad-Betrieb, die altbewährten mechanischen Sperren zum Einsatz kommen, kann es zu Problemen kommen, wenn das Fahrzeug mit aktivierten mechanischen Sperren betrieben wird und während eines solchen Betriebszustandes des Fahrzeuges eine der vorstehend aufgeführten Fahrzeugstabilisierungsvorrichtungen fahrerunabhängig einen der den Fahrzeugrädern zugeordneten Bremsaktuatoren ansteuert, d.h. einen fahrerunabhängigen Bremseneingriff durchführt. Diese besagten Geländefahrzeuge besitzen drei mechanische Differenzialsperren. Somit ist bei aktivierten Differenzialsperren eine hundertprozentige mechanische Kopplung des Vorder- und des Hinterachsdifferentials gewährleistet und des weiteren über die Differenzialsperre im Verteilergetriebe auch die Vorder- und die Hinterachse mechanisch gekoppelt. Wenn im Falle solch einer mechanischen Kopplung der Achsen ein fahrerunabhängiger Bremseneingriff durchgeführt wird, dann führt dieser zu einer Verschiebung der Bremskräfte über die nunmehr "starren" Achsen. Mit andern Worten: Es wird nicht nur an dem einen Fahrzeugrad, dessen Bremsaktuator angesteuert wird, eine Bremskraft erzeugt, sondern aufgrund der "starren" Achsen auch an den anderen Fahrzeugrädern. Dies führt zu einem nicht gewollten Fahrzeugverhalten.

Aus dem Stand der Technik sind verschiedene Vorrichtungen bekannt, die sich mit der vorstehend beschriebenen Problematik beschäftigen.

So offenbart die DE 196 41 101 A1 ein Verfahren zum Steuern einer Längssperre eines allradgetriebenen Fahrzeuges. Zur Erzeilung eines besseren Fahrkomforts wird die Längssperre automatisch bei einem Lastwechsel geschlossen. Um allerdings eine unbeeinträchtigte Fahrstabilität und Bremsstabilität des Fahrzeuges sicherzustellen, werden Einrichtungen wie ein Antiblockiersystem oder ein Fahrdynamiksystem bevorrangt. D.h. bei aktivierter Fahrwerks- oder Bremsregelung bleibt die Längssperre bzgl. des Lastwechsels unberücksichtigt. Darüber hinaus wird bei einer durch den Fahrer des Fahrzeuges eingeleiteten Bremsung die Längssperre, sofern sie geschlossen ist, sofort geöffnet. In der Zusammenschau ist der DE 196 41 101 A1 Folgendes zu entnehmen: Soll ein fahrerabhängiger oder ein fahrerunabhängiger Bremseneingriff durchgeführt werden, so wird diesem Bremseneingriff der Vorrang gegeben und die Längssperre geöffnet oder gar nicht erst geschlossen.

Als weiterer Stand der Technik ist die EP 0 191 131 B1 bekannt. In diesem Dokument wird ein Straßenfahrzeug mit Blockierschutz vorgeschlagen, bei welchem die Vorderräder individuell geregelt und die Hinterräder nach dem Select-Low-Prinzip geregelt sind. Die angetriebene Hinterachse ist mit einer einschaltbaren Differentialsperre versehen. Um die Stabilität des Fahrzeugs bei eingelegter Differentialsperre zu erhöhen, ist eine Einrichtung vorgesehen, die das Einlegen der Sperre erkennt und bei eingelegter Sperre die Logik der Blockierschutzelektronik der Vorderachse von Individualregelung (IR) auf eine modifizierte Individual- Regelung (MIR), eine Select-Low-Regelung (SLR) oder eine andere Gier- und Lenkmoment abschwächende Regellogik an den Vorderrädern umschaltet. Der als gattungsbildend anzusehenden EP 0 191 131 B1 ist somit Folgendes zu entnehmen: Die Arbeitsweise einer Fahrzeugstabilisierungsvorrichtung, die, um das Fahrzeug zu stabilisieren, zumindest den Fahrzeugrädern zugeordnete Bremsaktuatoren fahrerunabhängig ansteuert, wird in ihrer Arbeitsweise beeinflusst, sobald die Längssperre einen anderen als den nicht-geschalteten Betriebszustand einnimmt.

Das in der EP 0 191 131 A1 beschriebene Fahrzeug ist lediglich mit einer Fahrzeugstabilisierungsvorrichtung, nämlich mit einer Blockierschutzvorrichtung ausgestattet. Vorschläge, wie vorgegangen werden soll, wenn das Fahrzeug mit mehreren Fahrzeugstabilisierungsvorrichtungen ausgestattet ist, die, um das Fahrzeug zu stabilisieren, zumindest den Fahrzeugrädern zugeordnete Bremsaktuatoren fahrerunabhängig ansteuern, sind diesem Dokument nicht zu entnehmen.

Eine Vorrichtung bzw. ein Verfahren gemäß den Oberbegriff der Ansprüche 1 bzw. 11 ist aus der Druckschrift DE 199 21 064 A bekannt.

Vor diesem Hintergrund ergibt sich folgende Aufgabe: Es soll eine Vorrichtung geschaffen werden, die bei Fahrzeugen mit Allradantrieb bzw. bei Geländefahrzeugen, die gleichermaßen mit Differenzialsperren und mit Fahrzeugstabilisierungsvorrichtungen ausgestattet sind, die zur Stabilisierung des Fahrzeuges zumindest den Fahrzeugrädern zugeordnete Bremsaktuatoren fahrerunabhängig ansteuern, einen uneingeschränkten Geländebetrieb dieser Fahrzeuge bei gleichzeitig längstmöglicher Unterstützung des Fahrers bei eventuell auftretenden kritischen Fahrsituationen ermöglicht.

Unter uneingeschränktem Geländebetrieb ist Folgendes zu verstehen: Ein Fahrzeug mit Allradantrieb bzw. ein Geländefahrzeug, welches mit Fahrzeugstabilisierungsvorrichtungen ausgestattet ist, die zur Stabilisierung des Fahrzeuges zumindest den Fahrzeugrädern zugeordnete Bremsaktuatoren fahrerunabhängig ansteuern, soll sich im Geländebetrieb bei aktivierten Sperren trotz der vorhandenen Fahrzeugstabilisierungsvorrichtungen so verhalten, wie ein Fahrzeug, welches solche Fahrzeugstabilisierungsvorrichtungen nicht aufweist, und bei dem folglich während des Geländebetriebes auch keine nachteilige Beeinflussung des Fahrzeugverhaltens durch fahrerunabhängige Bremseneingriffe auftreten kann.

Diese Aufgabe wird durch die Merkmale des Anspruchs 1 bzw. durch die des Anspruchs 11 gelöst.

Erfindungsgemäß wird zur Lösung der vorstehenden Aufgabe bei einem Fahrzeug, in welchem mehrere, nach unterschiedlichen Strategien arbeitende Fahrzeugstabilisierungsvorrichtungen angeordnet sind, die, um das Fahrzeug zu stabilisieren, zumindest den Fahrzeugrädern zugeordnete Bremsaktuatoren fahrerunabhängig ansteuern, und bei dem sowohl der Vorderachse als auch der Hinterachse jeweils eine schaltbare Differenzialsperre wirktechnisch zugeordnet ist und eine weitere schaltbare Differenzialsperre wirktechnisch zwischen der Vorderachse und der Hinterachse angeordnet ist,
wobei die Differenzialsperren einen nicht-geschalteten Betriebszustand und neben diesem nicht-geschalteten Betriebszustand einen ersten, von dem nicht-geschalteten Betriebszustand verschiedenen Betriebszustand, bei dem die Differenzialsperren vorgewählt sind, und einen zweiten, von dem nicht-geschalteten und dem ersten Betriebszustand verschiedenen Betriebszustand, bei dem die Differenzialsperren geschaltet sind, einnehmen, sobald die zwischen der Vorderachse und der Hinterachse angeordnete Differenzialsperre den ersten Betriebszustand einnimmt ein Teil der Fahrzeugstabilisierungsvorrichtungen in ihrer Arbeitsweise beeinflusst, und sobald diese Differenzialsperre den zweiten Betriebszustand einnimmt, alle Fahrzeugstabilisierungsvorrichtungen in ihrer Arbeitsweise beeinflusst.

Diese erfindungsgemäße Vorgehensweise, die einer gestuften Vorgehensweise entspricht, hat folgenden Vorteil: Solange sich die Differenzialsperre in dem nicht-geschalteten Betriebszustand befindet, besteht zwischen den Rädern einer Fahrzeugachse bzw. zwischen den Achsen des Fahrzeuges keine starre Kopplung, folglich können sich Bremskräfte, die an einem Rad aufgebaut werden, nicht auf andere Räder übertragen. Dies bedeutet, dass die den Fahrzeugrädern zugeordneten Bremsaktuatoren bedarfsgerecht angesteuert werden können, ohne dass dabei störende Effekte zu befürchten sind. Es besteht keine Notwendigkeit, die Fahrzeugstabilisierungsvorrichtungen in ihrer Arbeitsweise zu beeinflussen, folglich stehen sie in voller Funktionalität zur Unterstützung des Fahrers zur Verfügung. Sobald sich dagegen die Differenzialsperre in dem vorgewählten Betriebszustand, d.h. in der Übergangsphase zwischen dem nicht-geschalteten und dem geschalteten Betriebszustand befindet, ist davon auszugehen, dass es in absehbarer Zeit zu einer starren Kopplung zwischen den einzelnen Rädern bzw. Achsen und somit zu einer Verschiebung von Bremskräften zwischen den einzelnen Rädern kommen kann. In dem vorgewählten Betriebszustand ist die Differenzialsperre zwar noch nicht aktiviert, jedoch wird deren Aktivierung innerhalb einer kurzen Zeitspanne erfolgen. Um einer eventuell auftretenden störenden Verschiebung von Bremskräften vorzubeugen, wird ein Teil der Fahrzeugstabilisierungsvorrichtungen bereits in diesem Stadium in ihrer Arbeitsweise beeinflusst. Es handelt sich hierbei um eine vorbeugende Maßnahme, da der Zeitpunkt, zu dem die Differenzialsperre letztlich aktiviert wird und eine Beeinflussung der Fahrzeugstabilisierungsvorrichtungen in ihrer Arbeitsweise erforderlich sein wird, nicht exakt vorausbestimmbar ist. Es wird lediglich ein Teil der Fahrzeugstabilisierungsvorrichtungen in ihrer Arbeitsweise beeinflusst und zwar derjenige, auf deren Unterstützung in der Übergangsphase und dem damit verbundenen Fahrzeugzustand verzichtet werden kann. Die restlichen Fahrzeugstabilisierungsvorrichtungen werden in ihrer Arbeitsweise nicht beeinflusst und stehen somit zur Unterstützung des Fahrers zur Verfügung. Hierbei handelt es sich um solche Fahrzeugstabilisierungsvorrichtungen, auf deren Unterstützung auch in der Übergangsphase und dem damit verbundenen Fahrzeugzustand nicht verzichtet werden soll. Dadurch wird in einem minimalen Umfang eine Stabilisierung des Fahrzeuges sichergestellt. Erst wenn sich die Differenzialsperre in dem geschalteten Betriebszustand befindet, werden auch die restlichen Fahrzeugstabilisierungsvorrichtungen in ihrer Arbeitsweise beeinflusst, was bedeutet, dass dem Fahrer sämtliche Fahrzeugstabilisierungsvorrichtungen allenfalls in einem nur noch beschränkten Umfang oder gar nicht mehr zur Verfügung stehen. Durch diese Maßnahme wird eine mögliche Verschiebung von Bremskräften aufgrund der Kopplung zwischen den Rädern vermieden. Auf die Unterstützung des Fahrers durch die Fahrzeugstabilisierungsvorrichtungen kann in solchen Betriebszuständen des Fahrzeuges, es liegen kleine Geschwindigkeiten vor, verzichtet werden, da in solchen Betriebszuständen für gewöhnlich keine stabilisierenden fahrerunabhängigen Bremseingriffe erforderlich sind.

Die Arbeitsweise der Fahrzeugstabilisierungsvorrichtungen wird dabei jeweils dergestalt beeinflusst, dass die fahrerunabhängige Ansteuerung der den Fahrzeugrädern zugeordneten Bremsaktuatoren durch die jeweilige Fahrzeugstabilisierungsvorrichtung unterbleibt. Dadurch wird für den Fall, dass die Differenzialsperre einen anderen als den nicht-geschalteten Betriebszustand einnimmt, d.h. entweder vorgewählt oder geschaltet bzw. aktiviert ist, sichergestellt, dass keiner der den Fahrzeugrädern zugeordneten Bremsaktuatoren fahrerunabhängig angesteuert wird, und somit an keinem der Fahrzeugräder ein Bremskraftaufbau oder Bremskraftabbau stattfindet, der bei diesem Betriebszustand der Differenzialsperre zu einer nachteiligen Beeinflussung eines anderen Fahrzeugrades oder einer anderen Fahrzeugachse führen könnte und somit eine ungewollte und eventuell störende Beeinflussung der Fahrzeugbewegung herbeiführen würde. Die vorstehend beschriebene vorteilhafte Beeinflussung der jeweiligen Fahrzeugstabilisierungsvorrichtung entspricht einer Deaktivierung der jeweiligen Fahrzeugstabilisierungsvorrichtungen.

Wie bereits ausgeführt, werden bei der erfindungsgemäßen Vorrichtung die Fahrzeugstabilisierungsvorrichtungen in ihrer Arbeitsweise gestuft beeinflusst. Vorteilhafterweise bietetsich folgende Vorgehensweise an: Wenn die Differenzialsperre den ersten Betriebszustand einnimmt, werden bis auf diejenige Fahrzeugstabilisierungsvorrichtung, die durch fahrerunabhängige Ansteuerung der Bremsaktuatoren verhindert, dass die Fahrzeugräder während eines Bremsvorganges blockieren, alle im Fahrzeug angeordneten Fahrzeugstabilisierungsvorrichtungen in ihrer Arbeitsweise beeinflusst. Sobald die Differenzialsperre den zweiten Betriebszustand einnimmt, wird auch diese Fahrzeugstabilisierungsvorrichtung in ihrer Arbeitsweise beeinflusst. Durch diese Maßnahem wird sichergestellt, dass diese Fahrzeugstabilisierungsvorrichtung, die bekannterweise einer Bremsschlupfregelung entspricht, längstmöglich in vollem Umfang dem Fahrer zur Unterstützung zur Verfügung steht.

Bei dem Fahrzeug, welches eine Vorderachse und eine Hinterachse aufweist, handelt es sich um ein Fahrzeug mit Allradantrieb. Bei diesem Fahrzeug ist sowohl der Vorderachse als auch der Hinterachse jeweils eine Differenzialsperre wirktechnisch zugeordnet. D.h. die Vorderachse weist ein Differenzialgetriebe mit Differenzialsperre auf, im Folgenden als Vorderachsdifferenzialgetriebe und Vorderachsdifferenzialsperre bezeichnet, und die Hinterachse weist ein Differenzialgetriebe mit Differenzialsperre auf, im Folgenden als Hinterachsdifferenzialgetriebe und Hinterachsdifferenzialsperre bezeichnet. Darüber hinaus ist bei dem Fahrzeug eine weitere Differenzialsperre wirktechnisch zwischen der Vorderachse und der Hinterachse angeordnet. Mit andern Worten: Das betrachtete Fahrzeug weist ein aus einem Differenzialgetriebe und einer Differenzialsperre bestehendes Verteilergetriebe zur Aufteilung des Drehmomentes zwischen der Vorderachse und der Hinterachse auf. Dieses Differenzialgetriebe und diese Differenzialsperre werden im Folgenden als Längsdifferenzialgetriebe und Längsdifferenzialsperre bezeichnet.

Erfindungsgemäß wird die Arbeitsweise der Fahrzeugstabilisierungsvorrichtung beeinflusst, sobald die zwischen der Vorderachse und der Hinterachse angeordnete Differenzialsperre, d.h. die Längsdifferenzialsperre, einen anderen als den nicht-geschalteten Betriebszustand einnimmt. Die Beeinflussung der Arbeitsweise der Fahrzeugstabilisierungsvorrichtung wird aus folgendem Grund auf die Längsdifferenzialsperre ausgerichtet: Bei einem Fahrzeug mit Allradantrieb, welches mit den vorstehend genannten drei Differenzialsperren ausgestattet ist, werden diese in der Reihenfolge Längsdifferenzialsperre, dann Hinterachsdifferenzialsperre und schließlich Vorderachsdifferenzialsperre vorgewählt und aktiviert. D.h. unabhängig davon, welche der drei Differenzialsperren letztlich aktiviert wird, die Längsdifferenzialsperre wird zwangsläufig immer aktiviert. Folglich reicht es für die Entscheidung, ob eine Beeinflussung der Arbeitsweise der Fahrzeugstabilisierungsvorrichtung erforderlich ist oder nicht, aus, zu überwachen, ob die Längsdifferenzialsperre vorgewählt wird.

Bei einem Übergang der Differenzialsperre von dem nicht-geschalteten Betriebszustand in den geschalteten Betriebszustand wird der erste Betriebszustand zeitlich vor dem zweiten Betriebszustand eingenommen. Dabei entspricht der geschaltete Betriebszustand dem zweiten Betriebszustand. Im nicht-geschalteten Betriebszustand ist die Differenzialsperre nicht aktiviert. Im geschalteten Betriebszustand ist die Differenzialsperre aktiviert. Der vorstehend aufgeführte erste Betriebszustand entspricht einem Übergangsbetriebszustand zwischen dem nicht-geschalteten und dem geschalteten Betriebszustand.

Vorteilhafterweise sind im Fahrzeug als Fahrzeugstabilisierungsvorrichtungen wenigstens eine Bremsschlupfregelung (ABS) und ein Bremsassistent (BAS) und/oder eine Antriebsschlupfregelung (ASR) und/oder ein elektronisches Traktionssystem (ETS) und/oder eine Fahrdynamikregelung (ESP) angeordnet. Mit anderen Worten: Das Fahrzeug ist auf jeden Fall mit einer Bremsschlupfregelung ausgestattet und kann eine beliebige Kombination der weiteren Fahrzeugstabilisierungsvorrichtungen aufweisen.

Für den Fall, dass die Differenzialsperre den ersten Betriebszustand einnimmt, d.h. vorgewählt wird, wird der Bremsassistent und/oder die Antriebsschlupfregelung und/oder das elektronische Traktionssystem und/oder die Fahrdynamikregelung in ihrer Arbeitsweise beeinflusst, d.h. deaktiviert.
D.h. die Bremsschlupfregelung bleibt in ihrer Arbeitsweise unbeeinflusst, wodurch zumindest beim Bremsen für ein stabiles Fahrzeugverhalten gesorgt ist. Je nachdem, welche der weiteren vorstehend aufgeführten Fahrzeugstabilisierungsvorrichtungen das Fahrzeug aufweist, werden diese in ihrer Arbeitsweise beeinflusst, d.h. deaktiviert.

Für den Fall, dass die Differenzialsperre den zweiten Betriebszustand einnimmt, d.h. aktiviert wird, wird zusätzlich zu den Fahrzeugstabilisierungsvorrichtungen, deren Arbeitsweise bereits beeinflusst wurde, als sich die Differenzialsperre in dem ersten Betriebszustand befand, auch die Bremsschlupfregelung in ihrer Arbeitsweise beeinflusst. D.h. die Bremsschlupfregelung und der Bremsassistent und/oder die Antriebsschlupfregelung und/oder das elektronische Traktionssystem und/oder die Fahrdynamikregelung werden in ihrer Arbeitsweise beeinflusst. Konkret bedeutet dies: Sowohl die Bremsschlupfregelung als auch die weiteren im Fahrzeug vorhandenen Fahrzeugstabilisierungsvorrichtungen werden in ihrer Arbeitsweise beeinflusst.

Vorteilhafterweise ist der Betriebszustand der Differenzialsperren vom Fahrer durch Betätigung eines Schaltmittels einstellbar. Dabei gilt folgende Reihenfolge für die Einstellung des zumindest einen weiteren von dem nicht-geschalteten Betriebszustand verschiedenen Betriebszustand der Differenzialsperren: Zunächst wird der Betriebszustand der wirktechnisch zwischen der Vorderachse und der Hinterachse angeordneten Differenzialsperre, der Längsdifferenzialsperre, dann der Betriebszustand der wirktechnisch der Hinterachse zugeordneten Differenzialsperre, der Hinterachsdifferenzialsperre und dann der Betriebszustand der wirktechnisch der Vorderachse zugeordneten Differenzialsperre, der Vorderachsdifferenzialsperre, eingestellt.

Als besonders vorteilhaft hat sich erwiesen, dass der Fahrer über den Betriebszustand der Differenzialsperre und/oder über die Arbeitsweise der im Fahrzeug angeordneten Fahrzeugstabilisierungsvorrichtung und/oder über möglicherweise auftretende Fehler mittels eines Anzeigemittels informiert wird. Vor allem die Anzeige von Fehlern, die an den Differenzialsperren oder die aufgrund des Betriebes der Differenzialsperren auftreten, ist von besonderem Interesse. Die Fehlerüberwachung für die Differenzialsperre wird vorteilhafterweise in Abhängigkeit zumindest eines den Betriebszustand der Differenzialsperre repräsentierenden Signals durchgeführt.

Wie bereits erwähnt, ist der Betriebszustand der Differenzialsperre vom Fahrer durch Betätigung eines Schaltmittels einstellbar. Vorteilhafterweise bietet sich folgende Fehlerüberwachung an: Für den Fall, dass nach Betätigung des Schaltmittels zur Einstellung eines vom nicht-geschalteten Betriebszustand verschiedenen Betriebszustandes der Differenzialsperre eine vorgegebene Zeitdauer verstrichen ist, ohne dass die Differenzialsperre diesen Betriebszustand einnimmt, wird auf einen Fehler erkannt.

Diese Fehlerüberwachung lässt sich wie folgt noch verbessern: Für den Fall, dass eine erste vorgegebene Zeitdauer verstrichen ist, ohne dass die Differenzialsperre den zweiten Betriebszustand einnimmt, wird eine Fahrzeugstabilisierungsvorrichtung, mit der ein Blockieren der Räder bei einem Bremsvorgang verhindert wird, in ihrer Arbeitsweise beeinflusst wird. Ergänzend oder alternativ wird für den Fall, dass oberhalb einer vorgegebenen Fahrzeuggeschwindigkeit eine zweite vorgegebene Zeitdauer verstrichen ist, ohne dass die Differenzialsperre den zweiten Betriebszustand einnimmt, diese Situation dem Fahrer mitgeteilt und/oder ein Fehlereintrag in einem Speichermedium vorgenommen.

Besonders vorteilhaft ist, dass sich die erfindungsgemäße Vorrichtung bzw. das erfindungsgemäße Verfahren in einfacher und kostengünstiger Art und Weise in Fahrzeuge mit Allradantrieb implementieren lässt.

Weitere Vorteile ergeben sich aus der nachfolgenden Beschreibung und der beigefügten Zeichnung. An dieser Stelle sei darauf hingewiesen, dass eine beliebige Kombination der Unteransprüche und somit der in den Unteransprüchen beschriebenen Gegenstände denkbar ist.

Das Ausführungsbeispiel wird anhand der Zeichnung näher beschrieben. Es zeigen:
- Fig. 1: eine schematische Darstellung eines Fahrzeuges mit Allradantrieb bzw. eines Geländefahrzeuges, bei dem die erfindungsgemäße Vorrichtung bzw. das erfindungsgemäße Verfahren zum Einsatz kommt und
- Fig. 2: eine schematische Darstellung der erfindungsgemäßen Vorrichtung und
- Fig. 3: eine schematische Darstellung des erfindungsgemäßen Verfahrens, welches in der erfindungsgemäßen Vorrichtung abläuft.

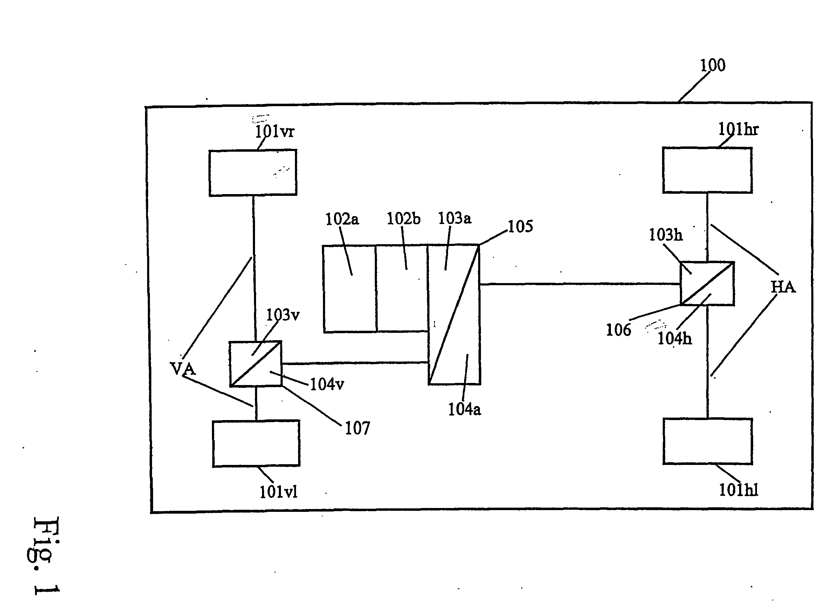

Die schematische Darstellung in Figur 1 zeigt ein Fahrzeug 100, welches Fahrzeugräder aufweist, die in abkürzender Schreibweise mit 101ij bezeichnet sind. Diese abkürzende Schreibweise hat folgende Bedeutung: Mit dem Index i wird angezeigt, ob es sich um ein Vorderrad (v) oder um ein Hinterrad (h) handelt. Mit dem Index j wird angezeigt, ob es sich um ein linkes (l) oder ein um rechtes (r) Rad handelt. Sofern diese abkürzende Schreibweise im Zusammenhang mit anderen Komponenten verwendet wird, hat sie dort dieselbe Bedeutung. Ferner weist das Fahrzeug einen Motor 102a und ein mit diesem zusammenwirkendes Getriebe 102b auf.

Bei dem Fahrzeug 100 soll es sich um ein Fahrzeug mit Allradantrieb bzw. um ein entsprechend ausgestattetes Geländefahrzeug handeln. Aus diesem Grund ist das Fahrzeug 100 mit einem Verteilergetriebe 105 ausgestattet, welches aus einem Differenzialgetriebe 103a und einer Differenzialsperre 104a besteht. Das Verteilergetriebe 105 steht mit dem Motor 102a über das Getriebe 102b in Wirkverbindung und dient der Aufteilung des Drehmomentes auf die Vorderachse VA und auf die Hinterachse HA. Zu diesem Zweck steht das Verteilergetriebe 105 mit einem der Hinterachse HA zugeordneten Achsgetriebe 106 in Wirkverbindung, welches aus einem Differenzialgetriebe 103h und einer Differenzialsperre 104h aufgebaut ist. Ferner steht zu diesem Zweck das Verteilergetriebe 105 mit einem der Vorderachse VA zugeordneten Achsgetriebe 107 in Wirkverbindung, welches aus einem Differenzialgetriebe 103v und einer Differenzialsperre 104v besteht.

An dieser Stelle sei Folgendes bzgl. der in Figur 1 gewählten Darstellung für das Verteilergetriebe und die Achsgetriebe bemerkt: Die Darstellung in Form eines zusammenfassenden Blockes, der das Verteilergetriebe bzw. die Achsgetriebe darstellt, mit einem diagonalen Trennstrich soll lediglich andeuten, dass das jeweilige Getriebe aus zwei Einzelkomponenten, nämlich jeweils einem Differenzialgetriebe und einer zugehörigen Differenzialsperre besteht. Diese Darstellung hat lediglich die Aufgabe, den prinzipiellen Aufbau der Getriebe darzustellen, und soll keine wirkungstechnische oder funktionstechnische Bedeutung bezüglich der an den zusammenfassenden Block angebundenen Achsen bzw. Wellen haben.

Zum besseren Verständnis sei an dieser Stelle auf einzelne der vorstehend aufgeführten Komponenten näher eingegangen:

Bei Fahrzeugen werden an den Antriebsachsen Differenzialgetriebe eingesetzt, um die bei Kurvenfahrt auftretenden oder durch unterschiedlichen Reifenradius, welcher beispielsweise auf Fertigungstoleranzen der Reifen oder unterschiedlichen Reifenluftdruck zurückzuführen ist, bedingten Drehzahldifferenzen der angetriebenen Räder auszugleichen. Durch den Einsatz von Differenzialgetrieben wird somit Zwangsschlupf zwischen den Rädern der Antriebsachse vermieden.

Bei Fahrbahnverhältnissen mit unterschiedlicher Traktion an den Antriebsrädern bestimmt das Rad mit dem niedrigen Reibwert die übertragbare Vortriebskraft des Fahrzeuges und rutscht bei Antriebsmomentüberschuss durch. Dieser Traktionsverlust kann durch ein Sperrdifferenzial bzw. durch eine Differenzialsperre abgebaut werden(die beiden Bezeichnungen Sperrdifferenzial und Differenzialsperre sind gleichbedeutend). Heutzutage wird zwischen einerseits formschlüssigen, schaltbaren und andererseits kraftschlüssigen, selbsttätigen Differenzialsperren unterschieden. Formschlüssige Differenzialsperren verbinden im aktivierten, d.h. geschalteten Zustand beide Achshälften der Antriebsachse starr miteinander, was bei Kurvenfahrt zu Zwangsschlupf und Verspannung führt. Mit anderen Worten: Mit formschlüssigen Differenzialsperren wird eine hundertprozentige mechanische, d.h. starre Kopplung der beiden Räder der Antriebsachse realisiert. Formschlüssige Differenzialsperren werden auch als mechanische Differenzialsperren bezeichnet. Im Zusammenhang mit der erfindungsgemäßen Vorrichtung bzw. dem erfindungsgemäßen Verfahren soll das betrachtete Fahrzeug mit solchen mechanischen Differenzialsperren ausgestattet sein.

Im Vergleich zu einem einachsig angetriebenen Fahrzeug weist ein zweiachsiges Fahrzeug mit Allradantrieb drei Differenzialgetriebe 103a, 103h und 103v mit ebenso vielen Differenzialsperren 104a, 104h und 104v auf. An jeder der beiden Fahrzeugachsen VA und HA ist ein Differenzialgetriebe 103v und 103h mit zugeordneter Differenzialsperre 104v und 104h vorgesehen. Zudem weist das Fahrzeug ein zwischen der Vorderachse und der Hinterachse angeordnetes Verteilergetriebe 105 auf, welches als Differenzialgetriebe 103a mit Differenzialsperre 104a realisiert ist. Die beiden Fahrzeugachsen VA und HA werden über das zentral angeordnete Verteilergetriebe 105 mit hälftig oder auch asymmetrisch aufgeteiltem Drehmoment angetrieben.

Um die der erfindungsgemäßen Vorrichtung bzw. dem erfindungsgemäßen Verfahren zugrundeliegende Problematik nochmals zu verdeutlichen: Wenn ein Fahrzeug mit Allradantrieb mit schaltbaren mechanischen Differenzialsperren ausgestattet ist, sind für den Fall, dass die Längsdifferenzialsperre 104a aktiviert ist, die Fahrzeugachsen VA und HA mechanisch gekoppelt. Für den Fall, dass die Vorderachsdifferenzialsperre lo4v aktiviert ist, sind die Räder der Vorderachse mechanisch gekoppelt. Für den Fall, dass die Hinterachsdifferenzialsperre 104h aktiviert ist, sind die Räder der Hinterachse mechanisch gekoppelt. Folglich führt ein fahrerunabhängig durchgeführter, radindividueller Bremseneingriff, sei es ein Bremsdruckaufbau oder ein Bremsdruckabbau, bei aktivierten Differenzialsperren zu einer Beeinflussung der mechanisch gekoppelten Fahrzeugräder und/oder Fahrzeugachsen und somit zu einer ungewollten Beeinflussung des Fahrzeugverhaltens. Dies gilt es mit der erfindungsgemäßen Vorrichtung bzw. dem erfindungsgemäßen Verfahren zu vermeiden.

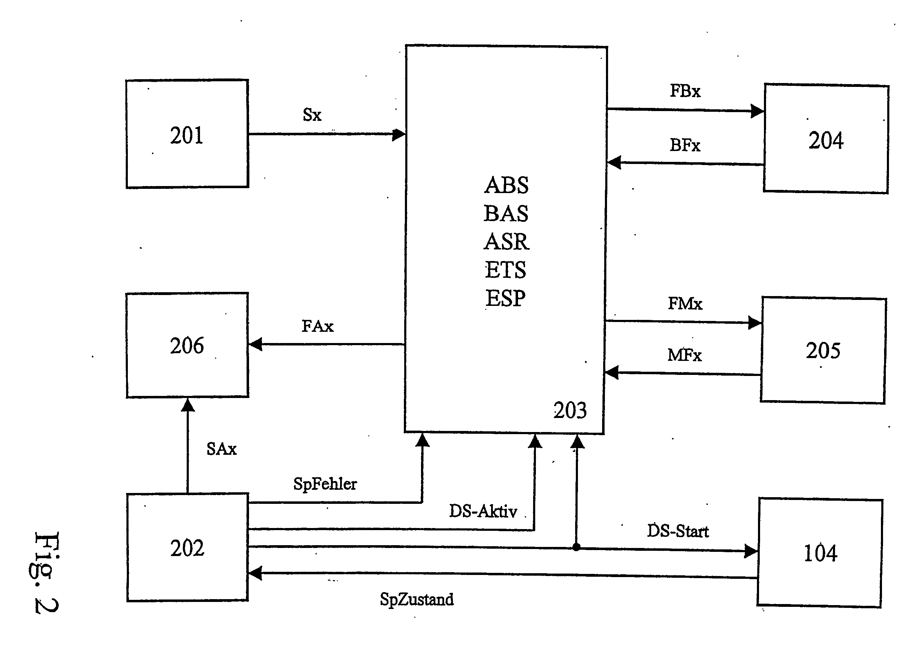

In Figur 2 stellt Block 203 die im Fahrzeug angeordnete Fahrzeügstabilisierungsvorrichtung bzw. die im Fahrzeug angeordneten Fahrzeugstabilisierungsvorrichtungen dar. Je nach Ausstattungsgrad des Fahrzeuges handelt es sich bei dem Block 203 entweder um eine einzelne Fahrzeugstabilisierungsvorrichtung oder um mehrere, nach unterschiedlichen Strategien arbeitende Fahrzeugstabilisierungsvorrichtungen. Verkürzt formuliert: Das Fahrzeug ist mit mindestens einer Fahrzeugstabilisierungsvorrichtung ausgestattet.

Die in Figur 2 gewählte Form der Darstellung soll keine einschränkende Wirkung haben. Es ist auch denkbar, dass für jede einzelne der nach unterschiedlichen Strategien arbeitenden Fahrzeugstabilisierungsvorrichtungen ein eigenständiger Block 203' vorgesehen ist, der entsprechend dem Block 203 mit den anderen in Figur 2 dargestellten Komponenten in Wirkverbindung steht.

In allgemeiner Form, d.h. unabhängig von der konkreten Ausgestaltung der im Fahrzeug angeordneten Fahrzeugstabilisierungsvorrichtung bzw. Fahrzeugstabilisierungsvorrichtungen ist der Block 203 mit einem Block 201 verbunden. Bei dem Block 201 handelt es sich um die Sensorik, die für den Betrieb der Fahrzeugstabilisierungsvorrichtung bzw. Fahrzeugstabilisierungsvorrichtungen erforderlich ist und die dem Block 203 die jeweils benötigten Eingangsgrößen Sx zur Durchführung der entsprechenden Regelung bzw. Steuerung zur Verfügung stellt.

Ferner steht der Block 203 in allgemeiner Form mit einem Block 204 und mit einem Block 205 in Verbindung. Der Block 204 stellt die den einzelnen Fahrzeugrädern zugeordneten Bremsaktuatoren dar, die von der Fahrzeugstabilisierungsvorrichtung zur Durchführung fahrerunabhängiger, radindividueller Bremseneingriffe mit Hilfe der Signale FBx ansteuert. Sofern erforderlich, erhält die Fahrzeugstabilisierungsvorrichtung mittels der Signale BFx eine Rückmeldung von den Bremsaktuatoren über deren Betriebszustand.

Der Einfachheit halber sind in Figur 2 die den Fahrzeugrädern 101ij jeweils zugeordneten Bremsaktuatoren 204ij zu einem Block 204 zusammengefasst. Ferner sei bemerkt, dass die Bremsaktuatoren Teil einer hydraulischen oder einer elektrohydraulischen oder einer pneumatischen oder einer elektropneumatischen oder einer elektromechanischen Bremsanlage sein können. Bei den ersten vier genannten Bremsanlagen handelt es sich bei den Bremsaktuatoren um angesteuerte Ventile, über welche Bremsmedium einem Radbremszylinder zugeführt oder aus diesem abgeführt wird. Bei der zuletzt genannten Bremsanlage handelt es sich bei den Bremsaktuatoren um elektrisch betätigte Stellmotoren, durch deren Betätigung an den einzelnen Fahrzeugrädern ein Bremsmoment erzeugt werden kann. Wenn in dieser Beschreibung der Ausdruck Bremsdruck verwendet wird, soll dies keine Einschränkung darstellen. In entsprechend Weise kann auch der Begriff Bremskraft oder ein anderer, eine Bremswirkung beschreibender Begriff, unter Berücksichtigung der erforderlichen technischen Änderungen, verwendet werden.

Bei dem Block 205 handelt es sich um Mittel zur Beeinflussung des vom Motor abgegebenen Antriebsmomentes. Die Einstellung des abzugebenden Antriebsmomentes erfolgt in Abhängigkeit der Signale FMx, die den Mitteln 205 ausgehend von der Fahrzeugstabilisierungsvorrichtung zugeführt werden. Sofern erforderlich, erhält die Fahrzeugstabilisierungsvorrichtung mittels der Signale MFx eine Rückmeldung von den Mitteln 205 über deren Betriebszustand. Bei den Mitteln 205 kann es sich beispielsweise um eine dem Motor zugeordnete Drosselklappe oder um eine Einspritzvorrichtung handeln.

Wie nachfolgend anhand der konkreten Beschreibung der im Fahrzeug angeordneten Fahrzeugstabilisierungsvorrichtungen zu sehen ist, hängt es von der Arbeitsweise der einzelnen Fahrzeugstabilisierungsvorrichtung ab, ob diese den Block 204 und/oder den Block 205 ansteuert.

Den im Zusammenhang mit der erfindungsgemäßen Vorrichtung bzw. dem erfindungsgemäßen Verfahren betrachteten Fahrzeugstabilisierungsvorrichtungen ist Folgendes gemeinsam: Um das Fahrzeug zu stabilisieren, steuern sie zumindest fahrerunabhängig einzelne, den Fahrzeugrädern zugeordnete Bremsaktuatoren an. Mit anderen Worten: Sie führen fahrerunabhängige, radindividuelle Bremseneingriffe durch, durch die Bremsdruck aufgebaut oder abgebaut wird.

Bei der Fahrzeugstabilisierungsvorrichtung bzw. bei den Fahrzeugstabilisierungsvorrichtungen kann es sich beispielsweise um Folgende handeln:
- Eine Fahrdynamikregelung, die unter der Abkürzung ESP (Electronic Stability Program) bekannt ist. Mittels solch einer Fahrdynamikregelung wird das Fahrzeug um seine Hochachse stabilisiert. Es findet also eine Regelung der Querdynamik statt. Hierzu wird aus dem vom Fahrer eingestellten Lenkwinkel und der ermittelten Fahrzeuggeschwindigkeit ein Sollwert für die Gierrate des Fahrzeuges ermittelt. Dieser Sollwert wird mit einem Istwert für die Gierrate, der mit Hilfe eines geeigneten Sensors ermittelt wird, verglichen. Bei diesem Vergleich wird die Abweichung des Istwertes von dem Sollwert ermittelt. In Abhängigkeit dieser Abweichung werden für die einzelnen Fahrzeugräder Sollschlupfänderungen ermittelt, mit denen der an dem jeweiligen Rad einzustellende Sollschlupf modifiziert wird. Zur Einstellung der modifizierten Sollschlupfwerte werden an den einzelnen Rädern 101ij des Fahrzeuges fahrerunabhängig Bremseneingriffe durch Betätigung der jeweils zugeordneten Bremsaktuatoren 204ij durchgeführt. Durch diese radindividuellen Bremseneingriffe wird für jedes einzelne Rad der jeweilige Istschlupf an den vorgegebenen Sollschlupf angeglichen. Für gewöhnlich wird durch diese Bremseneingriffe der Bremsdruck an einzelnen Rädern erhöht. Dadurch wird ein auf das Fahrzeug wirkendes Giermoment erzeugt, welches eine Drehung des Fahrzeuges um seine Hochachse bewirkt, wodurch sich der Istwert der Gierrate an den zugehörigen Sollwert annähert. Unterstützend zu den fahrerunabhängig durchgeführten, radindividuellen Bremseneingriffen, können auch Motoreingriffe durchgeführt werden, mit denen das vom Motor abgegebene Motormoment reduziert wird.
   Im Falle einer Fahrdynamikregelung sind in dem Block 201 Raddrehzahlsensoren, ein Lenkwinkelsensor, ein Querbeschleunigungssensor, ein Gierratensensor und ein Sensor zur Ermittlung des vom Fahrer eingestellten Vordruckes zusammengefasst. Der Block 203 steuert die Bremsaktuatoren, Block 204, und die Mittel zur Beeinflussung des vom Motor abgegebenen Motormomentes, Block 205, an.
- Ein elektronisches Traktionssystem (ETS). Dieses elektronische Traktionssystem wird aktiviert, wenn in einem festgelegten Geschwindigkeitsbereich eines der Antriebsräder durchdreht. Das durchdrehende Rad wird mit Hilfe fahrerunabhängiger Bremseneingriffe solange abgebremst, bis eine vorgegebene Raddrehzahldifferenz zwischen den Antriebsrädern einer Fahrzeugachse unterschritten wird. Durch den Bremseneingriff wird an dem durchdrehenden Rad der größere Reibwert des gegenüberliegenden Antriebsrades simuliert. An dem Rad, welches sich auf dem hohen Reibwert befindet, wird das abgesetzte Moment um das Bremsmoment erhöht, folglich entsteht eine Sperrwirkung. Tritt bei einer Kurvenfahrt in einem vorgegebenen Geschwindigkeitsbereich ein zu großer Antriebsschlupf auf, so wird die dadurch hervorgerufene Fahrzeuginstabilität durch einen beidseitigen Bremseneingriff abgebaut.
   Im Falle eines elektronischen Traktionssystems stellt der Block 201 Raddrehzahlsensoren dar. Der Block 203 steuert die Bremsaktuatoren, Block 204 an.
- Eine Antriebsschlupfregelung (ASR). Mit Hilfe einer Antriebsschlupfregelung wird das Fahrzeug bei einem Anfahrvorgang dahingehend stabilisiert, dass ein Durchdrehen der Antriebsräder vermieden wird. Es werden somit Eingriffe in die Längsdynamik vorgenommen. Eine Antriebsschlupfregelung arbeitet beispielsweise nach folgendem Prinzip: Für jedes der Antriebsräder wird ein Istwert für den Radschlupf ermittelt. Dieser Istwert wird mit einem Schwellenwert verglichen. Solange der Istwert kleiner ist als der Schwellenwert, liegt keine Instabilität vor, es sind keine stabilisierenden Eingriffe erforderlich. Ist der Istwert allerdings größer als der Schwellenwert, dann liegt eine Instabilität vor und es sind stabilisierende Eingriffe erforderlich. Im Fall des Überschreitens des Schwellenwertes kann der vom Fahrer durch Betätigung des Fahrpedals gewünschte Vortrieb, beispielsweise aufgrund eines zu niederen Reibwertes der Fahrbahn, nicht realisiert werden. An den Antriebsrädern liegt ein Antriebsmomentenüberschuss vor, was zu durchdrehenden Antriebsrädern und somit zu einem Verlust an Seitenführung führt. Um die Seitenführung wieder herzustellen, werden stabilisierende Eingriffe durchgeführt. Bei diesen stabilisierenden Eingriffen handelt es sich in erster Linie um fahrerunabhängig durchgeführte Bremseneingriffe an den Antriebsrädern. Durch diese Bremseneingriffe wird an den Antriebsrädern Bremsdruck aufgebaut, wodurch der an den Antriebsrädern vorherrschende Überschuss des Antriebsmomentes abgebaut wird. Je nach Beschaffenheit der Fahrbahnoberfläche, es kann beispielsweise eine sogenannte µ-split-Situation vorliegen, werden die fahrerunabhängigen Bremseneingriffe radindividuell, d.h. für jedes der Antriebsräder an die jeweilige Situation angepasst durchgeführt. Unterstützend zu den Bremseingriffen können auch Motoreingriffe durchgeführt werden, mit denen das vom Motor abgegebene Motormoment reduziert wird. Selbstverständlich können auch andere Größen zur Erkennung durchdrehender Antriebsräder ausgewertet werden.
   Im Falle einer Antriebsschlupfregelung sind in dem Block 201 Raddrehzahlsensoren und Mittel zur Bereitstellung von Größen, die den Betriebszustand des Motors repräsentieren, beispielsweise das vom Motor abgegebene Motormoment, zusammengefasst. Der Block 203 steuert die Bremsaktuatoren, Block 204, und die Mittel zur Beeinflussung des vom Motor abgegebenen Motormomentes, Block 205, an.
- Einen Bremsassistenten (BAS). Ein Bremsassistent soll den Fahrer bei der Durchführung von Bremsvorgängen dahingehend unterstützen, dass bei einem vom Fahrer eingeleiteten Bremsvorgang die in dieser Situation maximal mögliche Bremskraft bzw. Bremsverzögerung erzeugt wird. Hierzu wird die vom Fahrer vorgenommene Betätigung des Bremspedals überwacht. Wird eine vordefinierte Betätigung des Bremspedals festgestellt, dann werden fahrerunabhängig Bremseneingriffe durchgeführt, durch die die an den einzelnen Fahrzeugrädern vorherrschende Bremskraft erhöht wird. Dies kann beispielsweise durch Einspeisung von Bremsdruck erfolgen. Der Bremsdruck wird solange eingespeist, bis an den einzelnen Rädern die Blockiergrenze erreicht ist. Dadurch bleibt für das einzelne Rad bei optimaler Ausnutzung der Bremswirkung die Seitenführung erhalten. Zur Erkennung der vordefinierten Betätigung des Bremspedals wird beispielsweise der Auslenkwinkel oder der Auslenkweg des Bremspedals oder die Geschwindigkeit, mit der die Betätigung des Bremspedals erfolgt, ausgewertet. Eine vordefinierte Betätigung liegt dann vor, wenn ein jeweils zugehöriger Schwellenwert erreicht oder überschritten ist.
   Im Falle eines Bremsassistenten sind in dem Block 201 Raddrehzahlsensoren und Mittel zur Ermittlung der Betätigung des Bremspedals zusammengefasst. Der Block 203 steuert die Bremsaktuatoren, Block 204 an.
- Eine Bremsschlupfregelung (Antiblockiersystem, ABS). Mit Hilfe einer Bremsschlupfregelung wird das Fahrzeug bei einem Bremsvorgang dahingehend stabilisiert, dass ein Blockieren der gebremsten Räder vermieden wird. Es erfolgt somit eine Stabilisierung bzgl. der Längsdynamik. Eine Bremsschlupfregelung arbeitet beispielsweise nach folgendem Prinzip: Für alle Räder des Fahrzeuges wird jeweils ein Istwert für den Radschlupf ermittelt. Für jedes der Räder wird dieser Istwert mit einem Schwellenwert verglichen. Solange der Istwert kleiner als der Schwellenwert ist, liegt keine Instabilität vor, es sind keine stabilisierenden Eingriffe erforderlich. Ist der Istwert allerdings größer als der Schwellenwert, dann liegt eine Instabilität vor und es sind stabilisierende Eingriffe erforderlich. Im Fall des Überschreitens liegt für die einzelnen Räder des Fahrzeuges eine Blockiergefahr vor, weil beispielsweise die Fahrbahnoberfläche einen sehr niedrigen Reibwert aufweist. Ein blockierendes Rad kann keine Seitenführungskraft mehr übertragen, folglich liegt ein Verlust an Seitenführung vor. Um die Seitenführung wieder herzustellen, werden stabilisierende Eingriffe durchgeführt. Bei diesen stabilisierenden Eingriffen handelt es sich um fahrerunabhängig durchgeführte Bremseneingriffe, mit denen an den Rädern, an denen eine Blockiergefahr vorliegt, der eingespeiste Bremsdruck abgebaut wird. Da je nach Beschaffenheit der Fahrbahnoberfläche, das Verhalten der einzelnen Räder unterschiedlich ist, werden die fahrerunabhängigen Bremseneingriffe radindividuell, d.h. für jedes einzelne der Fahrzeugräder angepasst durchgeführt. Selbstverständlich können auch andere Größen zur Erkennung einer Blockiergefahr ausgewertet werden.
   Im Falle einer Bremsschlupfregelung stellt der Block 201 Raddrehzahlsensoren dar. Der Block 203 steuert die Bremsaktuatoren, Block 204 an.

Die vorstehenden Ausführungen zu den einzelnen Fahrzeugstabilisierungsvorrichtungen sind beispielhaft und sollen keine einschränkende Wirkung haben. Selbstverständlich sollen auch modifizierte Ausführungsformen der einzelnen Fahrzeugstabilisierungsvorrichtungen umfasst sein. Auch soll die vorstehende Aufzählung von Fahrzeugstabilisierungsvorrichtungen, die zur Stabilisierung des Fahrzeuges fahrerunabhängige Bremseneingriffe durchführen, nicht abschließend sein. Selbstverständlich können weitere, nach diesem Prinzip arbeitende Fahrzeugstabilisierungsvorrichtungen im Fahrzeug angeordnet sein. Darüber kann das Fahrzeug auch mit Fahrzeugstabilisierungsvorrichtungen ausgestattet sein, die andere Eingriffe als fahrerunabhängig durchgeführte Bremseneingriffe durchführen.

Block 202 stellt ein Schaltmittel dar, mit dem der Fahrer den Betriebszustand der im Fahrzeug angeordneten Differenzialsperren 104 einstellen kann. D.h. durch Betätigung des Schaltmittels 202 kann er vorgeben, ob die im Fahrzeug angeordneten Differenzialsperren den nicht-geschalteten Betriebszustand oder einen von diesem nicht-geschalteten Betriebszustand verschiedenen Betriebszustand einnehmen sollen. Es ist denkbar, dass durch Betätigung des Schaltmittels 202 für eine Differenzialsperre allein oder für eine vorgegebene Kombination von Differenzialsperren oder für alle Differenzialsperren zusammen der Betriebszustand eingestellt werden kann. Ausgehend von der Reihenfolge, in der die in einem Fahrzeug mit Allradantrieb angeordneten Differenzialsperren vorgewählt bzw. aktiviert werden, ergeben sich folgende Kombinationen: Die Längsdifferenzialsperre allein, die Längsdifferenzialsperre zusammen mit der Hinterachsdifferenzialsperre oder gleichzeitig alle drei Differenzialsperren. Das Schaltmittel 202 ist in entsprechender Weise ausgestaltet, um diese Kombinationen einstellen zu können.

Da die Längsdifferenzialsperre im Falle einer Vorwahl oder Aktivierung der Differenzialsperren immer vorgewählt oder aktiviert wird, sind bezogen auf die Längsdifferenzialsperre folgende Konstellationen möglich:
- Keine der Differenzialsperren ist vorgewählt. Folglich sind alle der vorstehend aufgeführten Fahrzeugstabilisierungsvorrichtungen aktiv, keine ist deaktiviert. Es finden uneingeschränkt fahrerunabhängige Bremseneingriffe statt.
- Die Längsdifferenzialsperre ist vorgewählt. In diesem Fall sind bis auf die Bremsschlupfregelung alle Fahrzeugstabilisierungsvorrichtungen deaktiviert. Nur noch die Bremsschlupfregelung kann fahrerunabhängige Bremseneingriffe durchführen.
- Die Längsdifferenzialsperre ist aktiviert. In diesem Fall sind alle im Fahrzeug angeordneten Fährzeugstabilisierungsvorrichtungen, also auch die Bremsschlupfregelung deaktiviert. Es können keine fahrerunabhängigen Bremseneingriffe mehr durchgeführt werden.

Vom Schaltmittel 202 wird zum einen ein Signal DS-Start ausgegeben, welches dem Block 203 und den Differenzialsperren 104 zugeführt wird. Zum anderen wird vom Block 202 ein Signal DS-Aktiv ausgegeben, welches dem Block 203 zugeführt wird. An dieser Stelle sei angemerkt, dass in Figur 2 der Einfachheit halber die im Fahrzeug 100 angeordneten Differentialsperren 104a, 104v und 104h zu einem Block 104 zusammengefasst sind.

Soll zumindest eine der Differenzialsperren oder sollen die Differenzialsperren einen von dem nicht-geschalteten Betriebszustand verschiedenen Betriebszustand, vornehmlich den ersten Betriebszustand einnehmen, so muss der Fahrer das Schaltmittel in eine erste Stellung bringen, wodurch für das Signal DS-Start ein erster Signalpegel, beispielsweise ein low-Pegel, ausgegeben wird. Das Signal DS-Start ist in diesem Fall aktiv. Dadurch nimmt zumindest eine der Differenzialsperren oder nehmen die Differenzialsperren den ersten Betriebszustand ein, d.h. sie werden vorgewählt. Außerdem wird für einen Teil der zum Block 203 zusammengefassten Fahrzeugstabilisierungsvorrichtungen deren Arbeitsweise beeinflusst, d.h. ein Teil dieser Fahrzeugstabilisierungsvorrichtungen wird deaktiviert.

Aufgrund der bereits beschriebenen Reihenfolge, in der die Differenzialsperren vorgewählt werden, wird dadurch, dass der Fahrer das Schaltmittel in die erste Stellung bringt, zunächst die Längsdifferenzialsperre vorgewählt. Bei den Fahrzeugstabilisierungsvorrichtungen, die deaktiviert werden, handelt es sich die Fahrdynamikregelung und/oder das elektronische Traktionssystem und/oder die Antriebsschlupfregelung und/oder den Bremsassistenten.

Sollen die Differentialsperren wieder den nicht-geschalteten Betriebszustand einnehmen, so muss der Fahrer das Schaltmittel in eine zweite Stellung bringen, wodurch für das Signal DS-Start ein zweiter Signalpegel, beispielsweise ein high-Pegel ausgegeben wird. D.h. das Signal DS-Start wird zurückgesetzt, es ist inaktiv. Die Längsdifferenzialeperre ist nicht mehr vorgewählt. Die vorstehend aufgeführten Fahrzeugstabilisierungsvorrichtungen sind wieder aktiviert.

Der jeweilige Zustand der Differenzialsperren 104 wird dem Schaltmittel 202 mittels Signale SpZustand zurückgemeldet. Diese Signale werden mit Hilfe einer in den Schaltmitteln 202 enthaltenen Logik verarbeitet. Wird durch die Signale SpZustand signalisiert, dass wenigstens eine der Differenzialsperren den aktivierten Zustand eingenommen hat, so gibt die Logik für das Signal DS-Aktiv einen ersten Signal-pegel, beispielsweise einen low-Pegel (2 Volt), aus. Dadurch wird die Arbeitsweise aller im Fahrzeug enthaltenen Fahrzeugstabilisierungsvorrichtungen, die fahrerunabhängige Bremseneingriffe durchführen, beeinflusst, d.h. sämtliche dieser Fahrzeugstabilisierungsvorrichtungen werden deaktiviert. Im konkreten Fall wird der erste Signalpegel ausgegeben, wenn die Längsdifferenzialsperre aktiviert ist. Dadurch wird auch die Bremsschlupfregelung deaktiviert. Je nachdem, mit welchen weiteren Fahrzeugstabilisierungsvorrichtungen das Fahrzeug ausgestattet ist, bleiben die Fahrdynamikregelung und/oder das elektronische Traktionssystem und/oder die Antriebsschlupfregelung und/oder der Bremsassistent weiterhin deaktiviert.

Wird dagegen durch die Signale SpZustand signalisiert, dass sich keine der Differenzialsperren in dem geschalteten Betriebszustand befindet, d.h. alle Differenzialsperren sind deaktiviert, dann gibt die Logik einen zweiten Signalpegel, beispielsweise einen high-Pegel (4 Volt), für das Signal DS-Aktiv aus. Dadurch wird wieder nur noch für einen Teil der vorstehend genannten Fahrzeugstabilisierungsvorrichtungen die Arbeitsweise beeinflusst, d.h. es wird wieder nur noch ein Teil dieser Fahrzeugstabilisierungsvorrichtungen deaktiviert.

Vorteilhafterweise sind an dem Schaltmittel Leuchtmittel, beispielsweise Leuchtdioden, angebracht, mittels derer angezeigt wird, ob bzw. welche Differenzialsperre vorgewählt oder aktiv ist.

An dieser Stelle sei nochmals darauf hingewiesen, dass die Reihenfolge, mit welcher die Differentialssperren vorgewählt bzw. aktiviert werden können, wie folgt festgelegt ist: Zunächst die Längsdifferenzialsperre, dann die Hinterachsdifferenzialsperre und dann die Vorderachsdifferenzialsperre.

Block 206 stellt ein Anzeigemittel dar, mit dem der Fahrer über den Betriebszustand der Differenzialsperren 104 und/oder über die Arbeitsweise der im Fahrzeug angeordneten Fahrzeugstabilisierungsvorrichtung bzw. Fahrzeugstabilisierungsvorrichtungen 203 und/oder über möglicherweise auftretende Fehler informiert wird. Zu diesem Zweck werden dem Anzeigemittel 206 ausgehend von dem Block 202 Signale SAx zugeführt, die Informationen über den Betriebszustand der Differenzialsperren oder möglicherweise bei diesen auftretende Fehler enthält. Ferner werden dem Anzeigemittel 206 ausgehend von dem Block 203 Signale FAx zugeführt, die Informationen über die Arbeitsweise der im Fahrzeug angeordneten Fahrzeugstabilisierungsvorrichtungen, die zur Stabilisierung des Fahrzeuges fahrerunabhängige Bremseneingriffe durchführen, oder über an diesen auftretende Fehler enthalten. Diese Informationen werden in dem Anzeigemittel aufbereitet bzw. ausgewertet und dem Fahrer dargestellt.

Wird im Block 202 erkannt, dass für eine der bifferenzialsperren ein Fehler vorliegt, dann wird im Block 202 ein Signal SpFehler erzeugt, welches dem Block 203 zugeführt und in dessen Abhängigkeit im Block 203 ein Fehlereintrag vorgenommen wird.

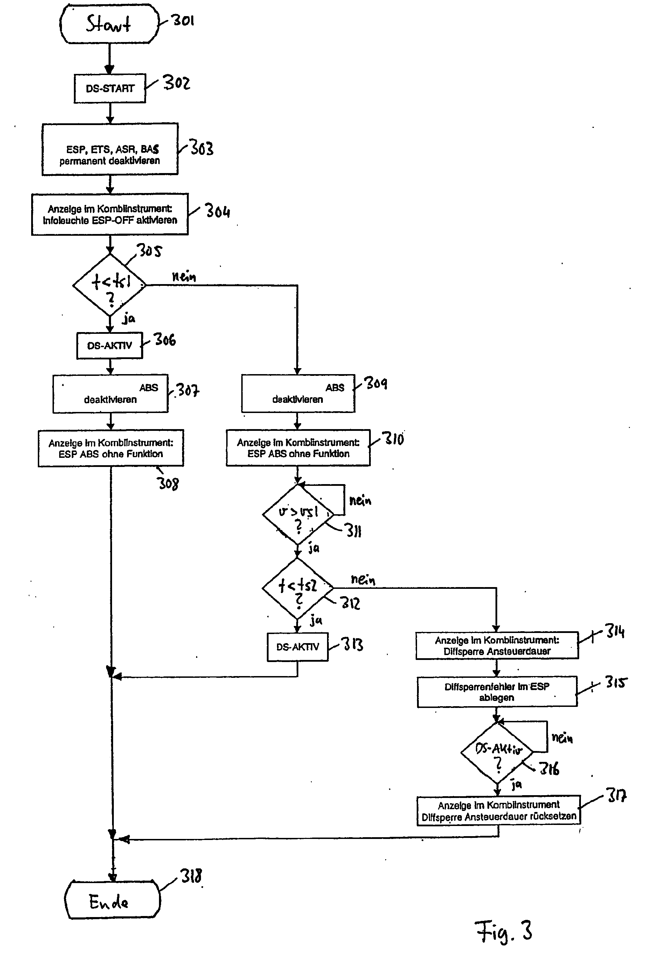

In Figur 3 ist in einem Ablaufschema das erfindungsgemäße Verfahren dargestellt, welches eine Schaltlogik darstellt.

Das erfindungsgemäße Verfahren beginnt mit einem Schritt 301, an den sich ein Schritt 302 anschließt. Im Schritt 302 wird dem Signal DS-Start der low-Pegel zugewiesen, da eine Betätigung des Schaltmittels 202 durch den Fahrer vorliegt, aufgrund derer die Differenzialsperren einen anderen als den nicht-geschalteten Betriebszustand einnehmen sollen, d.h. vorgewählt werden sollen. Dem Signal DS-Start wird ein erster Signalpegel zugewiesen, d.h. es wird gesetzt. Im vorliegenden Fall soll zumindest die Längsdifferenzialsperre vorgewählt sein. An den Schritt 302 schließt sich ein Schritt 303 an, in welchem die Arbeitsweise der Fahrzeugstabilisierungsvorrichtungen Fahrdynamikregelung und/oder Elektronisches Traktionssystem und/oder Antriebsschlupfregelung und/oder Bremsassistent beeinflusst wird, d.h. diese Fahrzeugstabilisierungsvorrichtungen werden deaktiviert bzw. abgeschaltet. Anschließend an den Schritt 303 wird ein Schritt 304 ausgeführt. In diesem Schritt wird dem Fahrer mit Hilfe eines Anzeigemittels, bei dem es sich um eine im Kombiinstrument angeordnete Informationsleuchte "ESP-OFF" handelt, angezeigt, dass die vorstehend aufgeführten Fahrzeugstabilisierungsvorrichtungen deaktiviert sind. Die Schritte 302, 303 und 304 betreffen die Vorwahl einer Differenzialsperre.

Im Anschluß an den Schritt 304 wird ein Schritt 305 ausgeführt, in welchem eine Zeitdauer t mit einem ersten Schwellenwert ts1 verglichen wird. Die Zeitdauer t repräsentiert die Zeitdauer, die zwischen dem Zeitpunkt, zu dem die Längsdifferenzialsperre vorgewählt wurde, und dem Zeitpunkt, zu dem die Längsdifferenzialsperre aktiviert ist, vergangen ist. Für den ersten Schwellenwert wird beispielsweise ein Wert von 5 Sekunden angenommen. Ist die Zeitdauer t kleiner als dieser erste Schwellenwert ts1, d.h. ist die Längsdifferenzialsperre vor Ablauf der durch ts1 repräsentierten Zeitdauer aktiviert worden, dann liegt ein fehlerfreier Betrieb der Längsdifferenzialsperre vor, und im Anschluß an den Schritt 305 wird ein Schritt 306 ausgeführt. In diesem Schritt 306 wird das Signal DS-Aktiv gesetzt, d.h. es wird ihm ein erster Signalpegel zugewiesen. Die im Schritt 306 vorgenommene Signalpegelzuweisung führt dazu, dass im nachfolgenden Schritt 307 zusätzlich zu den Fahrzeugstabilisierungsvorrichtungen, die bereits im Schritt 303 deaktiviert worden sind, auch die Bremsschlupfregelung deaktiviert wird. In dem sich anschließenden Schritt 308 wird die Deaktivierung der Bremsschlupfregelung dem Fahrer mitgeteilt. Dies kann beispielsweise durch eine entsprechende Textmeldung in einer Multifunktionsanzeige und/oder durch eine entsprechende Hinweisleuchte erfolgen. Anschließend an den Schritt 308 wird ein Schritt 318 ausgeführt, mit dem das erfindungsgemäße Verfahren beendet wird.

Wird dagegen im Schritt 305 festgestellt, dass die Zeitdauer t größer als der erste Schwellenwert ts1 ist, d.h. dass die Längsdifferenzialsperre nicht innerhalb der durch ts1 repräsentierten Zeitdauer aktiviert worden ist, dann ist davon auszugehen, dass eventuell ein Fehler beim Betrieb der Längsdifferenzialsperre vorliegt. In diesem Fall wird anschließend an den Schritt 305 ein Schritt 309 ausgeführt, in welchem entsprechend dem Schritt 307 die Bremsschlupfregelung deaktiviert wird. Anschließend an den Schritt 309 wird ein Schritt 310 ausgeführt, in welchem entsprechend dem Schritt 308 der Fahrer informiert wird.

Anschließend an den Schritt 310 wird ein Schritt 311 ausgeführt, in welchem überprüft wird, ob sich das Fahrzeug mit einer vorgegebenen Mindestgeschwindigkeit bewegt. Hierzu wird der Wert der aktuellen Fahrzeuggeschwindigkeit mit einem entsprechenden Schwellenwert vs1, der beispielsweise 5 km/h beträgt, verglichen. Ist die aktuelle Fahrzeuggeschwindigkeit kleiner als der Schwellenwert vs1, so wird erneut der Schritt 311 ausgeführt. Ist dagegen die aktuelle Fahrzeuggeschwindigkeit größer als der Schwellenwert vs1, so wird anschließend an den Schritt 311 ein Schritt 312 ausgeführt. In diesem Schritt 312 wird die bereits vorstehend erwähnte Zeitdauer t mit einem zweiten Schwellenwert ts2 verglichen. Dieser zweite Schwellenwert hat einen größeren Wert als der erste Schwellenwert, beispielsweise 30 Sekunden. Wird im Schritt 312 festgestellt, dass die Zeitdauer t kleiner als der zweite Schwellenwert ts2 ist, d.h. ist die Längsdifferenzialsperre vor Ablauf der durch ts2 repräsentierten Zeitdauer aktiviert worden, dann liegt ein fehlerfreier Betrieb der Längsdifferenzialsperre vor, weswegen im Anschluß an den Schritt 312 ein Schritt 313 ausgeführt wird. In diesem Schritt 313 wird das Signal DS-Aktiv entsprechend der Vorgehensweise im Schritt 306 gesetzt, d.h. es wird ihm der erste Signalpegel zugewiesen. Entsprechend dem Schritt 307 führt diese Wertzuweisung dazu, dass auch die Bremsschlupfregelung deaktiviert wird. Auf die Einfügung von Schritten an dieser Stelle der Figur 3, die den Schritten 307 und 308 entsprechen, wurde verzichtet. Anschließend an den Schritt 313 wird der Schritt 318 ausgeführt.

Wird dagegen im Schritt 312 festgestellt, dass die Zeitdauer t größer als der zweite Schwellenwert ts2 ist, d.h. dass die vorgewählte Längsdifferentialsperre bei rollendem Fahrzeug (siehe Schritt 311) nicht innerhalb der durch ts2 repräsentierten Zeitdauer aktiviert worden ist, muss ein Fehler der Längsdifferenzialsperre bzw. im Sperrensystem angenommen werden. D.h. es liegt ein mechanisches Sperrenproblem vor. Aus diesem Grund wird in einem sich an den Schritt 312 anschließenden Schritt 314 eine entsprechende Fehleranzeige im Kombiinstrument, genauer gesagt in einer Multifunktionsanzeige vorgenommen. Anschließend an den Schritt 314,wird ein Schritt 315 ausgeführt, in welchem ein Fehlereintrag in der Fahrzeugstabilisierungsvorrichtung vorgenommen wird. Das Signal DS-Aktiv wird nicht gesetzt, da die Längsdifferenzialsperre nicht aktiviert ist.

Anschließend an den Schritt 315 wird ein Schritt 316 ausgeführt, in dem überprüft wird, ob das Signal DS-Aktiv doch noch gesetzt wird. Wird im Schritt 316 festgestellt, dass das Signal DS-Aktiv nach wie vor nicht gesetzt ist, was gleichbedeutend damit ist, dass die Längsdifferenzialsperre noch immer nicht aktiviert ist, und demzufolge noch immer ein Fehler der Längsdifferenzialsperre vorliegt, dann wird erneut der Schritt 316 ausgeführt. Wird dagegen im Schritt 316 festgestellt, dass zwischenzeitlich das Signal gesetzt ist, was gleichbedeutend damit ist, dass zwischenzeitlich die Längsdifferenzialsperre aktiviert worden ist, und demzufolge davon auszugehen ist, dass die Längsdifferenzialsperre wieder fehlerfrei arbeitet, dann wird anschließend an den Schritt 316 ein Schritt 317 durchgeführt, in welchem dieser Sachverhalt dem Fahrer durch eine entsprechende Anzeige im Kombiinstrument mitgeteilt wird. Anschließend an den Schritt 317 wird der Schritt 318 ausgeführt.

Mit Hilfe des vorstehend beschriebenen erfindungsgemäßen Verfahrens wird sichergestellt, dass auch im Fall eines Leitungsbruchs und/oder eines Leitungskurzschlusses rechtzeitig die Arbeitsweise der Fahrzeugstabilisierungsvorrichtungen, die zur Stabilisierung des Fahrzeuges fahrerunabhängige Bremseneingriffe durchführen, beeinflusst wird. Mit anderen Worten: Sollten die Signale DS-START und/oder DS-AKTIV aufgrund eines Leitungsbruchs oder Leitungskurzschlusses ausfallen, ist durch die Redundanz dieser beiden Signale sichergestellt, das auf jeden Fall eine Abschaltung bzw. Deaktivierung der Fahrzeugstabilisierungsvorrichtungen erfolgt. Des weiteren wird der Ausfall eines dieser beiden Signale erkannt und eine entsprechende Fehlermeldung in der Multifunktionsanzeige des Kombiinstrumentes angestoßen.

An dieser Stelle sei erwähnt, dass die im Fahrzeug implementierte Funktion Elektronische Bremskraftverteilung auch bei aktiven Sperren immer gewährleistet bleiben muss. Ein Ausfall dieser Funktion wird dem Fahrer angezeigt.

Wie den vorstehenden Ausführungen zu entnehmen ist, enthält das in Figur 3 dargestellte erfindungsgemäße Verfahren eine Fehlerüberwachung, mit deren Hilfe Fehler, die an den Differenzialsperren oder die aufgrund des Betriebes der Differenzialsperren auftreten, erkannt werden können. Diese Fehlerüberwachung basiert auf der Auswertung von Zeitfenstern (Schritte 305 und 312) in Kombination mit einer Überprüfung der Fahrzeuggeschwindigkeit (Schritt 311).

Vor allem aufgrund der zeitbasierten Abfragen bedarf es einiger Zeit, bis eindeutig feststeht, ob ein Fehler vorliegt oder nicht. Aus diesem Grund bietet sich der Einsatz einer alternativen Fehlerüberwachung an, die sowohl auf die geschwindigkeitsbasierte als auch auf die zeitbasierten Abfragen verzichtet. Diese alternative, verbesserte Fehlerüberwachung wird nachfolgend beschrieben.

Die alternative Fehlerüberwachung läuft in dem in Figur 2 dargestellten Block 202 ab. Neben den beiden Signalen DS-Start und DS-Aktiv, die ohnehin in dem Block 202 erzeugt werden und somit in diesem zur Verfügung stehen, wird im Block 202 im Zusammenhang mit der alternativen Fehlerüberwachung ein weiteres Signal ausgewertet, welches dem Block 202 ausgehend vom Block 203 zugeführt wird. Zur Generierung dieses weiteren Signals benötigt der Block 203 Informationen über die Raddrehzahlen der einzelnen Fahrzeugräder. Da sämtliche der im Zusammenhang mit dem Block 203 vorgestellten Fahrzeugstabilisierungsvorrichtungen über Raddrehzahlsensoren verfügen, kann dieses weitere Signal von allen diesen Fahrzeugstabilisierungsvorrichtungen bereitgestellt werden. Im Folgenden soll allerdings davon ausgegangen werden, dass dieses weitere Signal von der im Block 203 enthaltenen Fahrdynamikregelung (ESP) bereitgestellt wird, was jedoch keine einschränkende Wirkung haben soll.

Mit diesem weiteren Signal wird dem Block 202 mitgeteilt, dass eine der Differenzialsperren, entsprechend den vorstehenden Ausführungen im Zusammenhang mit der Figur 3, zumindest die Längsdifferenzialsperre, aktiv ist. Diese Information wird im Block 203 wie folgt generiert: Liegt ein Bremsvorgang vor, bei dem die Bremsschlupfregelung eingreift, d.h. werden an wenigstens einem Fahrzeugrad Bremseneingriffe dergestalt vorgenommen, dass ein Blockieren dieses gebremsten Rades vermieden wird, dann werden die Raddrehzahlen der Räder einer Achse, beispielsweise der Vorderachse oder der Hinterachse, miteinander verglichen. Vorzugsweise werden die Raddrehzahlen der Achse miteinander verglichen, an der sich das Rad befindet, an dem die Bremseneingriffe im Rahmen der Bremsschlupfregelung durchgeführt werden. Haben beispielsweise das linke und das rechte Hinterrad dieselbe Raddrehzahl, oder was gleichbedeutend ist, dieselbe Radgeschwindigkeit, so ist dies ein Zeichen dafür, dass die der Hinterachse zugeordnete Differenzialsperre aktiv ist. Wie vorstehend ausgeführt, kann eine entsprechende Auswertung auch anhand der Vorderräder durchgeführt werden.

Zusammengefasst kann festgehalten werden: Bei einer Bremsung mit ABS-Regelung kann eindeutig eine aktive Differenzialsperre über die Verteilung der Raddrehzahlwerte erkannt werden. Eine aktive Differenzialsperre liegt dann vor, wenn zumindest für eine Achse des Fahrzeuges, nämlich für die, die mit der aktiven Differenzialsperre in Wirkverbindung steht, die Raddrehzahlen oder die Radgeschwindigkeiten den gleichen Wert aufweisen. Selbstverständlich kann die Erkennung einer aktiven Differenzialsperre auch durch Auswertung sämtlicher Radgeschwindigkeiten vorgenommen werden. Mit Hilfe der alternativen Fehlerüberwachung wird sichergestellt, dass nur mehr bei Erkennung eines tatsächlichen Fehler eine entsprechende Reaktion, verbunden mit einer entsprechenden Anzeige durchgeführt wird.

Kommt die alternative Fehlerüberwachung, bei der eine mechanische Kopplung der Achsen bei einem ABS-Bremsmanöver erkannt wird, in dem erfindungsgemäßen Verfahren zum Einsatz, so bedeutet dies für die Darstellung des erfindungsgemäßen Verfahrens in Figur 3, dass die sich auf die ursprüngliche Fehlererkennung beziehenden Schritte, d.h. die Schritte 305 bis 317, durch Schritte, die sich auf die alternative Fehlererkennung beziehen, zu ersetzen sind. Zumindest aber sind die Schritte 305 und 312, die sich auf die zeitliche Auswertung beziehen (gestufte Zeitenfenster) und der Schritt 311, bei dem eine geschwindigkeitsbasierte Auswertung stattfindet, nicht mehr erforderlich.

Im wesentlichen ergibt sich dann folgender Ablauf des erfindungsgemäßen Verfahrens: Nach dem Start des erfindungsgemäßen Verfahrens werden sowohl die bisherigen Signale DS-Start und DS-Aktiv, als auch das weitere Signal, welches im Block 203 generiert und dem Block 202 zugeführt wird, eingelesen und ausgewertet. In Abhängigkeit des dabei erhaltenen Ergebnisses, wird dann ein Teil der oder alle Fahrzeugstabilisierungsvorrichtungen deaktiviert und entsprechende Anzeigen bzw. Fehlereinträge generiert. Oder aber es bleiben sämtliche Fahrzeugstabilisierungsvorrichtungen aktiv.

Bei der ursprünglichen Fehlerüberwachung, bei der die beiden Signale DS-Start und DS-Aktiv in Alleinstellung ausgewertet werden, kann nicht bei allen möglichen Leitungsfehlern (Leitungsbruch bzw. Leitungskurzschluss) und/oder mechanischen Fehlern eindeutig eine Fehlfunktion erkannt werden. Dadurch dass bei der alternativen Fehlerüberwachung ein weiteres Signal ausgewertet wird, ist dies nun möglich.

In der nachfolgenden Tabelle 1 sind für die bei der alternativen Fehlerüberwachung auszuwertenden Signale DS-Start und DS-Aktiv sowie das weitere Signal, welches im Block 203 generiert und dem Block 202 zugeführt wird und welches nachfolgend mit
DS-Hard bezeichnet wird, sämtliche mögliche Signalzustände dargestellt und zu acht unterschiedlichen Systemzuständen zusammengefasst. Den in dieser Tabelle eingetragenen Werten 1 und 0 sind folgende Signalpegel zugewiesen: Der Wert "1" entspricht dem low-Pegel (2 Volt) und der Wert "0" entspricht dem high-Pegel (4 Volt).

**Tabelle 1**

| Systemzustand | DS-Start | DS-Aktiv | DS-Hard |
|---|---|---|---|
| | | | |
| 1 | 1 | 1 | 1 |
| 2 | 1 | 0 | 0 |
| 3 | 0 | 1 | 1 |
| 4 | 0 | 0 | 1 |
| 5 | 0 | 0 | 0 |
| 6 | 1 | 0 | 1 |
| 7 | 0 | 1 | 0 |
| 8 | 1 | 1 | 0 |

Welchen Zustand die einzelnen im Fahrzeug angeordneten Fahrzeugstabilisierungsvorrichtungen bei den in obiger Tabelle 1 dargestellten Systemzuständen einnehmen, kann der nachfolgenden Tabelle 2 entnommen werden.

**Tabelle 2**

| Systemzustand | ESP | | ASR/ETS | | ABS | | BAS | |
|---|---|---|---|---|---|---|---|---|
| | Aktiv | Passiv | Aktiv | Passiv | Aktiv | Passiv | Aktiv | Passiv |
| 1 | | X | | X | | X | | X |
| 2 | | X | | X | X | | | X |
| 3 | X | | X | | X | | X | |
| 4 | X | | X | | X | | X | |
| 5 | X | | X | | X | | X | |
| 6 | | X | | X | X | | | X |
| 7 | | X | | X | | X | | X |
| 8 | | X | | X | | X | | X |

Im Folgenden werden die einzelnen Systemzustände beschrieben.
- Systemzustand 1:
   Bei diesem Systemzustand soll das Fahrzeug gesperrt fahren, d.h. sämtliche im Fahrzeug vorhandenen Differenzialsperren sind aktiv bzw. aktiviert. Dies bedeutet wiederum, dass erfindungsgemäß sämtliche Fahrzeugstabilisierungsvorrichtungen deaktiviert, d.h. passiv geschaltet sind. Bei diesem Systemzustand besteht eine Rückkehroption in den Normalzustand (Systemzustand 5). Die drei betrachteten Signale nehmen die zu erwartenden Werte ein. Der Fahrer hat die Differenzialsperren vorgewählt, weswegen das Signal DS-Start den Wert 1 aufweist. Aufgrund der Vorwahl wurden die Differenzialsperren aktiviert, weswegen das Signal DS-Aktiv den Wert 1 aufweist. Die aktivierten Differenzialsperren werden ebenfalls durch den Wert 1 des Signals DS-Hard angezeigt.
   Die drei Signale sind untereinander plausibel, folglich liegt kein Fehler vor.
- Systemzustand 2:
   Bei diesem Systemszustand soll der Fahrer durch Betätigung des Schaltmittels 202 die Differenzialsperren vorgewählt haben. Die Differenzialsperren nehmen somit einen anderen als den nicht-geschalteten Betriebszustand ein, sie sollen jedoch noch nicht aktiv sein. Demzufolge sind von den Fahrzeugstabilisierungsvorrichtungen erfindungsgemäß die Fahrdynamikregelung (ESP) und die Antriebsschlupfregelung (ASR) und das elektronisches Traktionssystem (ETS) und der Bremsassistent (BAS) deaktiviert. Die Bremsschlupfregelung (ABS) ist noch aktiv. Die drei betrachteten Signale nehmen die zu erwartenden Werte ein. Der Fahrer hat die Differenzialsperren vorgewählt, weswegen das Signal DS-Start den Wert 1 aufweist. Die Differenzialsperren sollen in diesem Systemzustand lediglich vorgewählt und noch nicht aktiviert sein, weswegen das Signal DS-Aktiv den Wert 0 aufweist. Da die Differenzialsperren noch nicht aktiviert sind, weist das Signal DS-Hard ebenfalls den Wert 0 auf. Die drei Signale sind untereinander plausibel, folglich liegt kein Fehler vor.
- Systemzustand 3:
   Dieser Systemzustand tritt dann auf, wenn der Fahrer durch entsprechende Betätigung des Schaltmittels 202 die Differenzialsperren von dem aktivierten in den deaktivieren Zustand
   überführen möchte. Es handelt sich also um den Systemzustand der Sperrenabwahl.
   Solange die Differenzialsperren eingerückt, d.h. aktiviert sind, bleiben die Fahrzeugstabilisierungsvorrichtungen erfindungsgemäß zunächst deaktiviert, d.h. passiv geschaltet.
   Unmittelbar nachdem der Fahrer durch Betätigung des Schaltmittels 202 die Deaktivierung der Differenzialsperren eingeleitet hat, wird für eine vorgegebene Zeitdauer, die beispielsweise drei Sekunden beträgt, überprüft, ob sich das Fahrzeug in einem stabilen Zustand befindet bzw. ob das Fahrzeug stabiles Fahrverhalten aufweist. Erst wenn dies für die vorgegebene Zeitdauer erfüllt ist, werden sämtliche Fahrzeugstabilisierungsvorrichtungen wieder aktiv geschaltet. Verhält sich das Fahrzeug während der vorgegebenen Zeitdauer einmal instabil bzw. ist der Fahrzustand des Fahrzeuges während dieser Zeitdauer einmal instabil, so wird die Überprüfung erneut gestartet, die Fahrzeugstabilisierungsvorrichtungen bleiben weiterhin deaktiviert und es wird das Fahrzeugverhalten erneut für die vorgegebene Zeitdauer überprüft.
   Für den Fall, dass das Fahrzeug steht und der Fahrer unmittelbar nach Betätigung der Schaltmittel 202 zur Sperrenabwahl den Motor abstellt und diesen umgehend wieder startet, bleiben die Fahrzeugstabilisierungsvorrichtungen zunächst solange passiv geschaltet, bis die Differenzialsperren wieder ausgerückt sind.
   Die drei betrachteten Signale nehmen die zu erwartenden Werte ein. Der Fahrer hat die Schaltmittel 202 zur Einleitung der Deaktivierung der Differenzialsperren betätigt, weswegen das Signal DS-Start den Wert 0 aufweist. Da in dem betrachteten Systemzustand die Differenzialsperren noch nicht deaktiviert sind, weist das Signal DS-Aktiv den Wert 1 auf. Zusätzlich werden die noch aktivierten Differenzialsperren durch den Wert 1 des Signals DS-Hard angezeigt. Die drei Signale sind untereinander plausibel, folglich liegt kein Fehler vor.
   An dieser Stelle sei darauf hingewiesen, dass der Eintrag in Tabelle 2 für den dritten Systemzustand dem Zustand der Fahrzeugstabilisierungsvorrichtungen nach erfolgter Deaktivierung der Differenzialsperren entspricht. Die Fahrzeugstabilisierungsvorrichtungen sind demzufolge wieder aktiv.
- Systemzustand 4:
   Bei dem vierten Systemzustand handelt es sich um einen Systemzustand, bei dem die drei in Tabelle 1 dargestellten Signale unplausible Werte aufweisen.
   Würde das Signal DS-Hard den korrekten Wert aufweisen, dann würde dies bedeuten, dass sowohl das Signal DS-Start als auch das Signal DS-Aktiv einen falschen Wert aufweisen würde. Es müssten also sowohl für das Signal DS-Start als auch für das Signal DS-Aktiv jeweils Leitungsunterbrechungen vorliegen. Dies würde bedeuten, dass ein Doppelfehler vorliegen würde. Dies kann jedoch aufgrund der konkreten technischen Ausführung nicht der Fall sein.
   Folglich weist bei der in der Tabelle 1 dargestellten Signalkombination das Signal DS-Hard einen falschen und die beiden Signale DS-Start und DS-Aktiv den korrekten Wert auf. D.h. es kann davon ausgegangen werden, dass die Differenzialsperren weder vorgewählt noch aktiviert sind. Deshalb ist ein Deaktivieren der aktiven Fahrzeugstabilisierungsvorrichtungen nicht erforderlich. Deshalb werden bei Vorliegen der für diesen Systemzustand in Tabelle 1 dargestellten Signalkombination keine Maßnahmen zur Beeinflussung der Fahrzeugstabilisierungsvorrichtungen ergriffen.
   Sämtliche Fahrzeugstabilisierungsvorrichtungen bleiben aktiviert, da aufgrund der Signalkombination keine der Differenzialsperren aktiviert sein kann. Es wird auch keine Fehleranzeige im Kombiinstrument vorgenommen.
   Auch während einer ABS-Bremsung wird keine Deaktivierung der Fahrzeugstabilisierungsvorrichtungen vorgenommen, da das Signal DS-START nicht den Wert 1 aufweist und demzufolge die Überprüfung, ob die Differenzialsperren eingelegt sind oder nicht (betrifft die in Figur 3 dargestellten Schritte 303ff.), nicht durchlaufen wird.
- Systemzustand 5:
   Bei dem fünften Systemzustand handelt es sich um den Normalzustand, bei dem der Fahrer die Differenzialsperren nicht vorgewählt hat. Die Differenzialsperren sind somit auch nicht aktiv. Demzufolge sind erfindungsgemäß sämtliche Fahrzeugstabilisierungsvorrichtungen aktiv.
   Die drei betrachteten Signale nehmen die zu erwartenden Werte ein. Da keine Vorwahl seitens des Fahrers vorliegt, nimmt das Signal DS-Start den Wert 0 ein. Da die Differenzialsperren nicht aktiv sind, nehmen sowohl das Signals DS-Aktiv als auch das Signal DS-Hard den Wert 0 ein. Die drei Signale sind untereinander plausibel, folglich liegt kein Fehler vor.
   Entsprechend den Ausführungen zum Systemzustand 3, wird dieser Normalzustand ausgehend von dem Systemzustand, bei dem die Differenzialsperren aktiviert und demzufolge die Fahrzeugstabilisierungsvorrichtungen passiv geschaltet sind, erst nach einer vorgegebenen Zeitdauer, während der das Verhalten des Fahrzeuges überprüft wird, eingenommen.
- Systemzustand 6:
   Bei dem hier betrachteten Systemzustand wird angenommen, dass der Fahrer durch Betätigung des Schaltmittels 202 die Differenzialsperren vorgewählt hat. Aus diesem Grund weist das Signal DS-Start den Wert 1 auf. Die Differenzialsperren sollen auch eingerastet, d.h. aktiv sein. Dies wird durch den Wert 1 des Signals DS-Hard angezeigt. Allerdings liegt für das Signal DS-Aktiv nicht der aufgrund der aktivierten Differenzialsperren zu erwartende Wert 1 vor, statt dessen weist das Signal DS-Aktiv den Wert 0 auf. Für das Signal DS-Aktiv liegt somit ein Leitungskurzschluss zur Batteriespannung (high-Pegel, 4 Volt) vor. D.h. bei der in der Tabelle 1 dargestellten Signalkombination ist das Signal DS-Aktiv fehlerhaft.
   Da die beiden Signale DS-Start und DS-Hard zueinander plausible Werte aufweisen, wird zunächst davon ausgegangen, dass sich die Differenzialsperren im vorgewählten Betriebszustand befinden. Aufgrund dieser Annahme werden die einzelnen Fahrzeugstabilisierungsvorrichtungen in die Betriebszustände gebracht bzw. verbleiben in den Betriebszuständen, die sie erfindungsgemäß bei einer Vorwahl der Differenzialsperren auch einnehmen würden. D.h. die Fahrdynamikregelung (ESP) und die Antriebsschlupfregelung (ASR) und das elektronische Traktionssystem (ETS) und der Bremsassistent (BAS) werden bzw. bleiben deaktiviert. Lediglich die Bremsschlupfregelung (ABS) bleibt aktiv. Die Bremsschlupfregelung bleibt solange aktiv, bis ein Bremsvorgang vorliegt, bei dem die Bremsschlupfregelung eingreift und an wenigstens einem Fahrzeugrad Bremseneingriffe dergestalt vorgenommen werden, dass ein Blockieren dieses gebremsten Rades vermieden wird. Wird während solch eines Bremsvorganges, beispielsweise durch Auswertung der Raddrehzahlen erkannt, dass die Differenzialsperren eingerückt sind, so wird die Bremsschlupfregelung ebenfalls abgeschaltet. Die Bremsschlupfregelung wird allerdings erst zu dem Zeitpunkt abgeschaltet, zu dem die im Rahmen der Bremsschlupfregelung durchzuführenden Bremseneingriffe beendet sind. D.h. die begonnene Regelung wird noch zu Ende gebracht. Dadurch dass bei der in Tabelle 1 für den Systemzustand 6 dargestellten Signalkombination die Fahrzeugstabilisierungsvorrichtungen so betrieben werden, als währen die Differenzialsperren vorgewählt, verbleibt dem Fahrer ein Mindestmaß an Unterstützung, denn zumindest die Bremsschlupfregelung steht ihm zur Verfügung.
   Nachdem die Differenzialsperre wieder deaktiviert ist, bleiben die Fahrzeugstabilisierungsvorrichtungen bis zum nächsten Zündungslauf deaktiviert und es erfolgt ein Fehlereintrag. Außerdem wird im Kombiinstrument eine Fehlermeldung angezeigt.
- Systemzustand 7:
   Die in Tabelle 1 dargestellte Signalkombination deutet auf einen undefinierten Betriebszustand hin, da anhand dieser Signalkombination keine Aussage darüber getroffen werden kann, ob die Differenzialsperren aktiviert oder deaktiviert sind. Tritt dieses Phänomen nach einem Zündungsneustart auf, so werden sofort sämtliche Fahrzeugstabilisierungsvorrichtungen temporär passiv geschaltet. Dies ist in Tabelle 2 dargestellt.
   Nimmt das Signal DS-Aktiv den Wert 0 an, der aufgrund der Signalwerte der beiden Signale DS-Start und DS-Hard eigentlich zu erwarten wäre, und verhält sich das Fahrzeug danach für eine vorgegebene Zeitdauer, die beispielsweise 3 Sekunden beträgt, stabil, dann werden die Fahrzeugstabilisierungsvorrichtungen wieder aktiviert, d.h. zugeschaltet.
   Bei Vorliegen der in Tabelle 1 dargestellten Signalkombination erfolgt kein Fehlereintrag. Der Grund hierfür ist Folgender: Die beiden Signale DS-Start und DS-Aktiv weisen für die beiden Systemzustände 3 und 7 jeweils denselben Wert auf, und es liegt keine eindeutige Information über den Betriebszustand der Differenzialsperren vor.
- Systemzustand 8:
   Bei dem achten Systemzustand handelt es sich um einen Systemzustand, bei dem die drei in Tabelle 1 dargestellten Signale unplausible Werte aufweisen.
   Würde das Signal DS-Hard den korrekten Wert aufweisen, dann würde dies bedeuten, dass sowohl das Signal DS-Start als auch das Signal DS-Aktiv einen falschen Wert aufweisen würde. Es müssten also sowohl für das Signal DS-Start als auch für das Signal DS-Aktiv jeweils Leitungsfehler vorliegen.
   Dies würde bedeuten, dass ein Doppelfehler vorliegen würde. Dies kann jedoch aufgrund der konkreten technischen Ausführung nicht der Fall sein.
   Folglich weist bei der in der Tabelle 1 dargestellten Signalkombination das Signal DS-Hard einen falschen und die beiden Signale DS-Start und DS-Aktiv den korrekten Wert auf. D.h. es kann davon ausgegangen werden, dass die Differenzialsperren aktiviert sind. Deshalb werden bei Vorliegen der für diesen Systemzustand in Tabelle 1 dargestellten Signalkombination die Fahrzeugstabilisierungsvorrichtungen deaktiviert.
   Nehmen die Signale DE-Start und DS-Aktiv wieder den Wert 0 an, und verhält sich das Fahrzeug danach für eine vorgegebene Zeitdauer, die beispielsweise 3 Sekunden beträgt, stabil, dann werden die Fahrzeugstabilisierungsvorrichtungen wieder aktiviert, d.h. zugeschaltet.

Die sich aus den vorstehenden Ausführungen zu der alternativen Fehlerüberwachung ergebenden Änderungen im Aufbau der erfindungsgemäßen Vorrichtung bzw. im Ablauf des erfindungsgemäßen Verfahrens sind in den Figuren 2 bzw. 3 aus Gründen der Übersichtlichkeit nicht berücksichtigt worden.

Vorteilhafterweise sind im Fahrzeug als Fahrzeugstabilisierungsvorrichtungen wenigstens eine Bremsschlupfregelung (ABS) und ein Bremsassistent (BAS) und/oder eine Antriebsschlupfregelung (ASR) und/oder ein elektronisches Traktionssystem (ETS) und/oder eine Fahrdynamikregelung (ESP) angeordnet. Mit anderen Worten: Das Fahrzeug ist auf jeden Fall mit einer Bremsschlupfregelung ausgestattet und kann eine beliebige Kombination der weiteren Fahrzeugstabilisierungsvorrichtungen aufweisen.

## Patentansprüche

1. Vorrichtung zur Beeinflussung der Arbeitsweise wenigstens einer in einem Fahrzeug (100) angeordneten Fahrzeugstabilisierungsvorrichtung (203), wobei,
im Fahrzeug (100) mehrere, nach unterschiedlichen Strategien arbeitende Fahrzeugstabilisierungsvorrichtungen (203) angeordnet sind, die, um das Fahrzeug (100) zu stabilisieren, zumindest den Fahrzeugrädern (101ij) zugeordnete Bremsaktuatoren (204) fahrerunabhängig ansteuern, wobei es sich bei dem Fahrzeug (100), welches eine Vorderachse (VA) und eine Hinterachse (HA) aufweist, um ein zweiachsiges Fahrzeug mit Allradantrieb handelt, bei dem sowohl der Vorderachse (VA) als auch der Hinterachse (HA) jeweils eine Schaltbare Differenzialsperre (104v, 104h) wirktechnisch zugeordnet ist, und bei dem eine weitere Schaltbare Differenzialsperre (104a) wirktechnisch zwischen der Vorderachse (VA) und der Hinterachse (HA) angeordnet ist, wobei die Differenzialsperren (104a, 104h, 104v) neben dem nicht-geschalteten Betriebszustand einen ersten, von dem nicht-geschalteten Betriebszustand verschiedenen Betriebszustand, bei dem die Differenzialsperren (104a, 104h, 104v) vorgewählt sind, und einen zweiten, von dem nicht-geschalteten und dem ersten Be-triebszustand verschiedenen Betriebszustand, bei dem die Differenzialsperren (104a, 104h, 104v) geschaltet sind, einnehmen, **dadurch gekennzeichnet, dass** dann, wenn die die zwischen der Vorderachse (VA) und der Hinterachse (HA) angeordnete Differenzialsperre (104a) den ersten Betriebszustand einnimmt, ein Teil der Fahrzeugstabilisierungsvorrichtungen (203) in ihrer Arbeitsweise beeinflusst wird, und dann, wenn diese Differenzialsperre (104a) den zweiten Betriebszustand einnimmt, alle Fahrzeugstabilisierungsvorrichtungen (203) in ihrer Arbeitsweise beeinflusst werden, wobei
die Arbeitsweise der Fahrzeugstabilisierungsvorrichtungen (203) jeweils dergestalt beeinflusst wird, dass die fahrerunabhängige Ansteuerung der den Fahrzeugrädern (101ij) zugeordneten Bremsaktuatoren (204) durch die jeweilige Fahrzeugstabilisierungsvorrichtung (203) unterbleibt.

2. Vorrichtung nach Anspruch 1,
**dadurch gekennzeichnet,**
**dass** wenn die Differenzialsperre (104) den ersten Betriebszustand einnimmt, bis auf diejenige Fahrzeugstabilisierungsvorrichtung, die durch fahrerunabhängige Ansteuerung der Bremsaktuatoren (204) verhindert, dass die Fahrzeugräder (101ij) während eines Bremsvorganges blockieren, alle im Fahrzeug angeordneten Fahrzeugstabilisierungsvorrichtungen (203) in ihrer Arbeitsweise beeinflusst werden

3. Vorrichtung nach Anspruch 1,
**dadurch gekennzeichnet,**
**dass** bei einem Übergang der Differenzialsperre (104) von dem nicht-geschalteten Betriebszustand in den geschalteten Betriebszustand, der dem zweiten Betriebszustand entspricht, der erste Betriebszustand zeitlich vor dem zweiten Betriebszustand eingenommen wird.

4. Vorrichtung nach Anspruch 1,
**dadurch gekennzeichnet,**
**dass** im Fahrzeug (100) als Fahrzeugstabilisierungsvorrichtungen (203) wenigstens eine Bremsschlupfregelung (ABS) und ein Bremsassistent (BAS) und/oder eine Antriebsschlupfregelung (ASR) und/oder ein elektronisches Traktionssystem (ETS) und/oder eine Fahrdynamikregelung (ESP) angeordnet sind, und dass für den Fall, dass die Differenzialsperre (104) den ersten Betriebszustand einnimmt, der Bremsassistent (BAS) und/oder die Antriebsschlupfregelung (ASR) und/oder das elektronische Traktionssystem (ETS) und/oder die Fahrdynamikregelung (ESP) in ihrer Arbeitsweise beeinflusst wird, und dass für den Fall, dass die Differenzialsperre (104) den zweiten Betriebszustand einnimmt, zusätzlich zu den Fahrzeugstabilisierungüvorrichtungen, deren Arbeitsweise bereits beeinflusst wurde, als sich die Differenzialsperre in dem ersten Betriebszustand befand, auch die Bremsschlupfregelung (ABS) in ihrer Arbeitsweise beeinflusst wird.

5. Vorrichtung nach Anspruch 4,
**dadurch gekennzeichnet,**
**dass** für den Fall, dass die Differenzialsperre (104) den zweiten Betriebszustand einnimmt, die Bremsschlupfregelung (ABS) und der Bremsassistent (BAS) und/oder die Antriebsschlupfregelung (ASR) und/oder das elektronische Traktionssystem (ETS) und/oder die Fahrdynamikregelung (ESP) in ihrer Arbeitsweise beeinflusst wird.

6. Vorrichtung nach Anspruch 1,
**dadurch gekennzeichnet,**
**dass** der Betriebszustand der Differenzialsperren (104a, 104v, 104h) vom Fahrer durch Betätigung eines Schaltmittels (202) einstellbar ist, wobei folgende Reihenfolge für die Einstellung des zumindest einen weiteren von dem nicht-geschalteten Betriebszustand verschiedenen Betriebszustand der Differenzialsperren gilt: zunächst wird der Betriebszustand der wirktechnisch zwischen der Vorderachse (VA) und der Hinterachse (HA) angeordneten Differenzialsperre (104a), dann der Betriebszustand der wirktechnisch der Hinterachse (HA) zugeordneten Differenzialsperre (104h) und dann der Betriebszustand der wirktechnisch der Vorderachse (VA) zugeordneten Differenzialsperre (104v) eingestellt.

7. Vorrichtung nach Anspruch 1,
**dadurch gekennzeichnet,**
**dass** der Fahrer über den Betriebszustand der Differenzialsperre (104) und/oder über die Arbeitsweise der im Fahrzeug angeordneten Fahrzeugstabilisierungsvorrichtungen (203) und/oder über möglicherweise auftretende Fehler mittels eines Anzeigeinittels (206) informiert wird.

8. Vorrichtung nach Anspruch 1,
**dadurch gekennzeichnet,**
**dass** zumindest ein den Betriebszustand der Differenzialsperre (104) repräsentierendes Signal (DS-AKTIV) erzeugt wird, und dass in Abhängigkeit dieses Signals eine Fehlerüberwachung für die Differenzialsperre (104) durchgeführt wird.

9. Vorrichtung nach Anspruch 1,
**dadurch gekennzeichnet,**
**dass** der Betriebszustand der Differenzialsperre (104) vom Fahrer durch Betätigung eines Schaltmittels (202) einstellbar ist,
wobei für den Fall, dass nach Betätigung des Schaltmittels (202) zur Einstellung eines vom nicht-geschalteten Betriebszustand verschiedenen Betriebszustandes der Differenzialsperre (104) eine vorgegebene Zeitdauer (ts1, ts2) verstrichen ist, ohne dass die Differenzialsperre (104) diesen Betriebszustand einnimmt, auf einen Fehler erkannt wird.

10. Vorrichtung nach Anspruch 9,
**dadurch gekennzeichnet,**
**dass** für den Fall, dass eine erste vorgegebene Zeitdauer (ts1) verstrichen ist, ohne dass die Differenzialsperre (104) den zweiten Betriebszustand einnimmt, eine Fahrzeugstabilisierungsvorrichtung, mit der ein Blockieren der Räder bei einem Bremsvorgang verhindert wird, in ihrer Arbeitsweise beeinflusst wird, und/oder
**dass** für den Fall, dass oberhalb einer vorgegebenen Fahrzeuggeschwindigkeit eine zweite vorgegebene Zeitdauer (ts2) verstrichen ist, ohne dass die Differenzialsperre (104) den zweiten Betriebszustand einnimmt, diese Situation dem Fahrer mitgeteilt wird und/oder ein Fehlereintrag in einem Speichermedium vorgenommen wird.

11. Verfahren zur Beeinflussung der Arbeitsweise wenigstens einer in einem Fahrzeug (100) angeordneten Fahrzeugstabilisierungsvorrichtung (203), wobei,
im Fahrzeug (100) mehrere, nach unterschiedlichen Strategien arbeitende Fahrzeugstabilisierungsvorrichtungen (203) angeordnet sind, die, um das Fahrzeug (100) zu stabilisieren, zumindest den Fahrzeugrädern (101ij) zugeordnete Bremsaktuatoren (204) fahrerunabhängig, ansteuern, wobei es sich bei dem Fahrzeug (100), welches eine Vorderachse (VA) und eine Hinterachse (HA) aufweist, um ein zweiachsiges Fahrzeug mit Allradantrieb handelt, bei dem sowohl der Vorderachse (VA) als auch der Hinterachse (HA) jeweils eine Schaltbare Differenzialsperre (104v, 104h) wirktechnisch zugeordnet ist, und bei dem eine weitere Schaltbare Differenzialsperre (104a) wirktechnisch zwischen der Vorderachse (VA) und der Hinterachse (HA) angeordnet ist, wobei die Differenzialsperren (104a, 104h, 104v) neben dem nicht-geschalteten Betriebszustand einen ersten, von dem nicht-geschalteten Betriebszustand verschiedenen Betriebszustand, bei dem die Differenzialsperren (104a, 104h, 104v) vorgewählt sind, und einen zweiten, von dem nicht-geschalteten und dem ersten Betriebszustand verschiedenen Betriebszustand, bei dem die Differenzialsperren (104a, 104h, 104v) geschaltet sind, einnehmen, **dadurch gekennzeichnet, dass** dann, wenn die die zwischen der Vorderachse (VA) und der Hinterachse (HA) angeordnete Differenzialsperre (104a) den ersten Betriebszustand einnimmt, ein Teil der Fahrzeugstabilisierungsvorrichtungen (203) in ihrer Arbeitsweise beeinflusst wird, und dann, wenn diese Differenzialsperre (104a) den zweiten Betriebszustand einnimmt, alle Fahrzeugstabilisierungsvorrichtungen (203) in ihrer Arbeitsweise beeinflusst werden, wobei
die Arbeitsweise der Fahrzeugstabilisierungsvorrichtungen (203) jeweils dergestalt beeinflusst wird, dass die fahrerunabhängige Ansteuerung der den Fahrzeugrädern (101ij) zugeordneten Bremsaktuatoren (204) durch die jeweilige Fahrzeugstabilisierungsvorrichtung (203) unterbleibt.

## Claims

1. Device for influencing the operating mode of at least one vehicle stabilizing device (203) being arranged in a vehicle (100),
a plurality of vehicle stabilizing devices (203) which operate according to different strategies and which actuate, independently of the driver, at least brake actuators (204) which are assigned to the vehicle wheels (101ij), in order to stabilize the vehicle (100), are arranged in the vehicle (100), the vehicle (100) which has a front axle (VA) and a rear axle (HA) is a two-axle vehicle with all wheel drive in which both the front axle (VA) and the rear axle (HA) are each effectively assigned a switchable differential lock (104v, 104h), and in which a further switchable differential lock (104a) is arranged effectively between the front axle (VA) and the rear axle (HA), and the differential locks (104a, 104h, 104v) assuming, in addition to the non-switched operating state, a first operating state which is different from the non-switched operating state and in which the differential locks (104a, 104h, 104v) being preselected, and a second operating state which is different from the non-switched and the first operating state and in which the differential locks (104a, 104h, 104v) are switched, **characterized in that**
some of the vehicle stabilizing devices (203) are influenced in terms of their operating mode when the differential lock (104a), which is arranged between the front axle (VA) and the rear axle (HA), assumes the first operating state, and all the vehicle stabilizing devices (203) being influenced in terms of their operating mode when this differential lock (104a) assumes the second operating state, the operating mode of the vehicle stabilizing devices (203) is influenced in each case in such a way that the actuation - independently of the driver - of the brake actuators (204) which are assigned to the vehicle wheels (101ij) by the respective vehicle stabilizing device (203) does not occur.

2. Device according to Claim 1, **characterized in that** all the vehicle stabilizing devices (203) which are arranged in the vehicle are influenced in terms of their operating mode when the differential lock (104) assumes the first operating state, with the exception of that vehicle stabilizing device which, by actuating the brake actuators (204) independently of the driver, prevents the vehicle wheels (101ij) from locking during a braking operation.

3. Device according to Claim 1, **characterized in that**, when the differential lock (104) changes over from the non-switched operating state into the switched operating state which corresponds to the second operating state, the first operating state is assumed before the second operating state.

4. Device according to Claim 1, **characterized in that** at least one brake slip controller (ABS) and a braking assistant (BAS) and/or a traction slip controller (ASR) and/or an electronic traction system (ETS) and/or a vehicle movement dynamics controller (ESP) are arranged in the vehicle (100) as vehicle stabilizing devices (203) and **in that**, if the differential lock (104) assumes the first operating state, the braking assistant (BAS) and/or the traction slip controller (ASR) and/or the electronic traction system (ETS) and/or the vehicle movement dynamics controller (ESP) are influenced in their operating mode, and **in that**, if the differential lock (104) assumes the second operating state, in addition to the vehicle stabilizing devices whose operating mode was already influenced when the differential lock was in the first operating state, the brake slip controller (ABS) is also influenced in terms of its operating mode.

5. Device according to Claim 4, **characterized in that**, if the differential lock (104) assumes the second operating state, the brake slip controller (ABS) and the braking assistant (BAS) and/or the traction slip controller (ASR) and/or the electronic traction system (ETS) and/or the movement dynamics controller (ESP) are influenced in terms of their operating mode.

6. Device according to Claim 1, **characterized in that** the operating state of the differential locks (104a, 104v, 104h) can be set by the driver by activating a switching means (202), the following sequence applying to the setting of the at least one further operating state of the differential locks which is different from the non-switched operating state: at first the operating state of the differential lock (104a) which is effectively arranged between the front axle (VA) and the rear axle (HA), the operating state of the differential lock (104h) which is effectively assigned to the rear axle (HA) and then the operating state of the differential lock (104v) which is effectively assigned to the front axle (VA) are set.

7. Device according to Claim 1, **characterized in that** the driver is informed about the operating state of the differential lock (104) and/or about the operating mode of the vehicle stabilizing devices (203) which are arranged in the vehicle, and/or about possibly occurring faults, by means of a display means (206).

8. Device according to Claim 1, **characterized in that** at least one signal (DS-ACTIVE) which represents the operating state of the differential lock (104) is generated, and **in that** fault monitoring of the differential lock (104) is carried out as a function of this signal.

9. Device according to Claim 1, **characterized in that** the operating state of the differential lock (104) can be set by the driver by activating a switching means (202),
a fault being detected if, after activation of the switching means (202) in order to set an operating state of the differential lock (104) which is different from the non-switched operating state, a predefined time period (ts1, ts2) has passed without the differential lock (104) assuming this operating state.

10. Device according to Claim 9, **characterized in that**, if a first predefined time period (ts1) has passed without the differential lock (104) assuming the second operating state, a vehicle stabilizing device, with which locking of the wheels is prevented during a braking operation, is influenced in terms of its operating mode, and/or
**in that**, if a second predefined time period (ts2) has passed above a predefined vehicle speed without the differential lock (104) assuming the second operating state, this situation is communicated to the driver and/or a fault entry is made in a memory medium.

11. Method for influencing the operating mode of at least one vehicle stabilizing device (203) being arranged in a vehicle (100),
a plurality of vehicle stabilizing devices (203) which operate according to different strategies and which actuate, independently of the driver, at least brake actuators (204) which are assigned to the vehicle wheels (101ij), in order to stabilize the vehicle (100), are arranged in the vehicle (100), the vehicle (100) which has a front axle (VA) and a rear axle (HA) is a two-axle vehicle with all wheel drive in which both the front axle (VA) and the rear axle (HA) are each effectively assigned a switchable differential lock (104v, 104h), and in which a further switchable differential lock (104a) is arranged effectively between the front axle (VA) and the rear axle (HA), and the differential locks (104a, 104h, 104v) assuming, in addition to the non-switched operating state, a first operating state which is different from the non-switched operating state and in which the differential locks (104a, 104h, 104v) being preselected, and a second operating state which is different from the non-switched and the first operating state and in which the differential locks (104a, 104h, 104v) are switched, **characterized in that**
some of the vehicle stabilizing devices (203) are influenced in terms of their operating mode when the differential lock (104a), which is arranged between the front axle (VA) and the rear axle (HA), assumes the first operating state, and all the vehicle stabilizing devices (203) being influenced in terms of their operating mode when this differential lock (104a) assumes the second operating state, the operating mode of the vehicle stabilizing devices (203) is influenced in each case in such a way that the actuation - independently of the driver - of the brake actuators (204) which are assigned to the vehicle wheels (101ij) by the respective vehicle stabilizing device (203) does not occur.

## Revendications

1. Dispositif pour influencer le mode de fonctionnement d'au moins un dispositif de stabilisation (203) disposé dans un véhicule (100), plusieurs dispositifs de stabilisation de véhicule (203) travaillant selon différentes stratégies étant disposés dans le véhicule (100), lesquels, pour stabiliser le véhicule (100), activent indépendamment du conducteur des actionneurs de freinage (204) attribués au moins aux roues du véhicule (101ij), moyennant quoi il s'agit en ce qui concerne le véhicule (100), qui présente un essieu avant (VA) et un essieu arrière (HA), d'un véhicule à deux essieux avec traction sur les quatre roues, sur lequel à chaque fois un blocage de différentiel (104v, 104h) commutable est attribué au niveau de l'effet technique aussi bien à l'essieu avant (VA) qu'à l'essieu arrière (HA), et sur lequel un autre blocage de différentiel (104a) commutable est disposé au niveau de l'effet technique entre l'essieu avant (VA) et l'essieu arrière (HA), les blocages de différentiel (104a, 104h, 104v) occupant parallèlement à l'état de service non commuté un premier état de service, différent de l'état de service non commuté, dans lequel les blocages de différentiel (104a, 104h, 104v) sont présélectionnés, et un second état de service, différent de l'état de service non commuté et du premier état de service, dans lequel les blocages de différentiel (104a, 104h, 104v) sont commutés, **caractérisé en ce que**, dans les cas où le blocage de différentiel (104d) disposé entre l'essieu avant (VA) et l'essieu arrière (HA) occupe le premier état de service, une partie des dispositifs de stabilisation de véhicule (203) est influencée dans son mode de travail, et dans les cas où ce blocage de différentiel (104d) occupe le second état de service, tous les dispositifs de stabilisation de véhicule (203) sont influencés dans leur mode de travail, le mode de travail des dispositifs de stabilisation de véhicule (203) étant influencé à chaque fois de telle sorte que l'activation, indépendante du conducteur, des actionneurs de freinage (204) attribués aux roues du véhicule (101ij) par le dispositif de stabilisation de véhicule (203) respectif est supprimée.

2. Dispositif selon la revendication 1, **caractérisé en ce que**, lorsque le blocage de différentiel (104) occupe le premier état de service, à l'exception du dispositif de stabilisation de véhicule qui empêche par une activation, indépendante du conducteur, des actionneurs de freinage (204) que les roues de véhicule (101ij) se bloquent pendant une opération de freinage, tous les dispositifs de stabilisation de véhicule (203) disposés sur le véhicule sont influencés dans leur mode de travail.

3. Dispositif selon la revendication 1, **caractérisé en ce que**, lors d'un passage du blocage de différentiel (104) de l'état de service non commuté à l'état de service commuté, qui correspond au second état de service, le premier état de service est occupé dans le temps avant le second état de service.

4. Dispositif selon la revendication 1, **caractérisé en ce qu'**en tant que dispositifs de stabilisation de véhicule (203), au moins un réglage du glissement de freinage (ABS) et un assistant de freinage (BAS) et/ou un réglage du glissement d'entraînement (ASR) et/ou un système de traction électronique (ETS) et/ou un réglage de la dynamique de roulement (ESP) sont disposés dans le véhicule (100), et **en ce que**, dans le cas où le blocage de différentiel (104) occupe le premier état de service, l'assistant de freinage (BAS) et/ou le réglage du glissement d'entraînement (ASR) et/ou le système de traction électronique (ETS) et/ou le réglage de la dynamique de roulement (ESP) sont influencés dans leur mode de travail, et **en ce que**, dans le cas où le blocage de différentiel (104) occupe le second état de service, en supplément des dispositifs de stabilisation de véhicule, dont le mode de travail a été déjà influencé lorsque le blocage de différentiel se trouvait dans le premier état de service, également le réglage du glissement de freinage (ABS) est influencé dans son mode de travail.

5. Dispositif selon la revendication 4, **caractérisé en ce que**, dans le cas où le blocage de différentiel (104) occupe le second état de service, le réglage du glissement de freinage (ABS) et l'assistant de freinage (BAS) et/ou le réglage du glissement d'entraînement (ASR) et/ou le système de traction électronique (ETS) et/ou le réglage de la dynamique de roulement (ESP) sont influencés dans leur mode de travail.

6. Dispositif selon la revendication 1, **caractérisé en ce que**, l'état de service des blocages de différentiel (104a, 104v, 104h) peut être réglé par le conducteur par l'actionnement d'un moyen de commutation (202), l'ordre de succession suivant s'appliquant au réglage du au moins un autre état de service, différent de l'état de service non commuté, des blocages de différentiel : pour commencer, l'état de service du blocage de différentiel (104a) disposé au niveau de l'effet technique entre l'essieu avant (VA) et l'essieu arrière (HA), ensuite l'état de service du blocage de différentiel (104h) attribué au niveau de l'effet technique à l'essieu arrière (HA) et ensuite l'état de service du blocage de différentiel (104v) attribué au niveau de l'effet technique à l'essieu avant (VA) sont réglés.

7. Dispositif selon la revendication 1, **caractérisé en ce que**, le conducteur est informé de l'état de service du blocage de différentiel (104) et/ou du mode de travail des dispositifs de stabilisation de véhicule (203) disposés sur le véhicule et/ou de défauts apparaissant éventuellement à l'aide d'un moyen d'affichage (206).

8. Dispositif selon la revendication 1, **caractérisé en ce qu'**au moins un signal (DS-AKTIV) représente l'état de service du blocage de différentiel (104) est régénéré, et **en ce qu'**un contrôle d'erreur pour le blocage de différentiel (104) est effectué en fonction de ce signal.

9. Dispositif selon la revendication 1, **caractérisé en ce que**, l'état de service du blocage de différentiel (104) peut être réglé par le conducteur par l'actionnement d'un moyen de commutation (202), moyennant quoi dans le cas où, après l'actionnement du moyen de commutation (202) pour le réglage d'un état de service, différent de l'état de service non commuté, du blocage de différentiel (104), une durée prédéfinie (ts1, ts2) s'est écoulée sans que le blocage de différentiel (104) occupe cet état de service, on identifie un défaut.

10. Dispositif selon la revendication 9, **caractérisé en ce que**, dans le cas où une première durée (ts1) prédéfinie s'est écoulée sans que le blocage de différentiel (104) occupe le second état de service, un dispositif de stabilisation de véhicule, avec lequel un blocage des roues est empêché lors d'une opération de freinage, a une influence dans son mode de travail, et/ou **en ce que** dans le cas où, au-dessus d'une vitesse de véhicule prédéfinie, une seconde durée (ts2) prédéfinie s'est écoulée sans que le blocage de différentiel (104) occupe le second état de service, cette situation est communiquée au conducteur et une inscription d'erreur est effectuée dans un milieu de mémorisation.

11. Procédé pour influencer le mode de travail d'au moins un dispositif de stabilisation de véhicule (203) disposé dans un véhicule (100), plusieurs dispositifs de stabilisation de véhicule (203) travaillant selon différentes stratégies étant disposés dans le véhicule (100), lesquels activent, indépendamment du conducteur des actionneurs de freinage (204) attribués au moins aux roues de véhicule (101ij) pour stabiliser le véhicule (100), sachant que, en ce qui concerne le véhicule (100), qui présente un essieu avant (VA) et un essieu arrière (HA), il s'agit d'un véhicule à deux essieux avec traction sur les 4 roues, sur lequel respectivement un blocage de différentiel (104v, 104h) commutable est attribué au niveau de l'effet technique aussi bien à l'essieu avant (VA) qu'à l'essieu arrière (HA), et sur lequel un autre blocage de différentiel (104a) commutable est disposé au niveau de l'effet technique entre l'essieu avant (VA) et l'essieu arrière (HA), les blocages de différentiel (104a, 104h, 104v) occupant parallèlement à l'état de service non commuté un premier état de service, différent de l'état de service non commuté, dans lequel les blocages de différentiel (104a, 104h, 104v) sont présélectionnés, et un second état de service, différent de l'état de service non commuté et du premier état de service, dans lequel les blocages de différentiel (104a, 104h, 104v) sont commutés, **caractérisé en ce que**, lorsque le blocage de différentiel (104d) disposé entre l'essieu avant (VA) et l'essieu arrière (HA) occupe le premier état de service, une partie des dispositifs de stabilisation de véhicule (203) est influencée dans son mode de travail, et dans les cas où ce blocage de différentiel (104d) occupe le second état de service, tous les dispositifs de stabilisation de véhicule (203) sont influencés dans leur mode de travail, le mode de travail des dispositifs de stabilisation de véhicule (203) étant influencé à chaque fois de telle sorte que l'activation, indépendante du conducteur, des actionneurs de freinage (204) attribués aux roues de véhicule (101ij) par le dispositif de stabilisation de véhicule (203) est supprimée.
